# EUROPEAN PATENT APPLICATION

(11) **EP 4 227 822 A1**
(43) Date of publication of application: **16.08.2023**
(21) Application number: 20961182.1
(22) Date of filing: 13.11.2020
(51) Int. Cl.: G06F 16/23, G06N 5/02

(54) **METHOD AND APPARATUS FOR INTENT KNOWLEDGE ASSOCIATION BETWEEN INTENT SYSTEMS, AND SYSTEM**

(71) Applicant: Huawei Technologies Co., Ltd., Shenzhen, Guangdong 518129 (CN)
(72) Inventor: JU, Min, Shenzhen, Guangdong 518129 (CN); LI, Xianming, Shenzhen, Guangdong 518129 (CN)
(74) Representative: Pfenning, Meinig & Partner mbB
(86) International application number: PCT/CN2020/128754
(87) International publication number: WO 2022/099626

(57) **Abstract**

A method for associating intent knowledge between intent systems, an apparatus, and a system are disclosed. When intent knowledge of a first intent in a first intent system is updated (S101), a second intent system receives an intent knowledge update notification sent by the first intent system (S102). The intent knowledge update notification includes an update type and an intent keyword of the first intent. The second intent system associates, based on the intent knowledge update notification, the intent knowledge that is of the first intent and that corresponds to the intent keyword of the first intent with intent knowledge of a second intent in the second intent system (S 103). The first intent is a subintent of the second intent. In this way, when the intent knowledge of the first intent in the first intent system is updated, the intent knowledge is associated between the intent systems, to avoid that the intent knowledge of the first intent in the second intent system is missing or invalid due to the update of the intent knowledge of the first intent.

## Description

### TECHNICAL FIELD

This application relates to the field of intelligent network management technologies, and in particular, to a method for associating intent knowledge between intent systems, an apparatus, and a system.

### BACKGROUND

Each piece of intent knowledge stored in an intent knowledge repository (knowledge repository) of an intent system has a one-to-one corresponding intent keyword (Intentkeyword), identifying the intent knowledge. The intent knowledge includes an execution constraint (constraint) and an operation set (intentOperations): intentOperations [execution condition (executionConditon), operation type (operationType), and operation (operation)]. "operationType" of the intent knowledge repository is of an enumerated type. A value of "operationType" is "subintent", indicating that a corresponding operation describes a script of subintent delivery, including an intent keyword of the subintent. Intent knowledge corresponding to the subintent exists in an intent knowledge repository of a low-level (low-level) intent system.

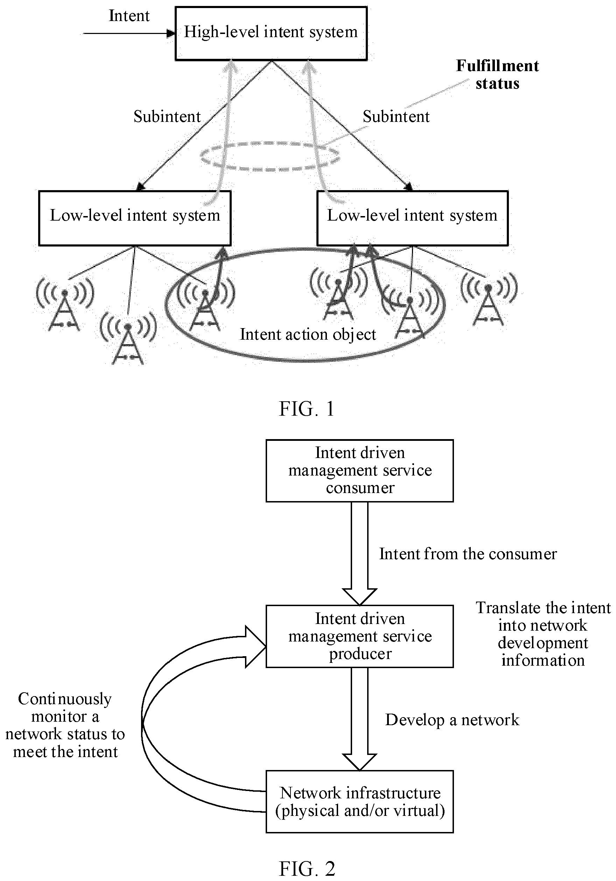

In addition, an intent knowledge repository of a high-level (high-level) intent system stores an intent keyword, intent driven object (IntentDrivenObject, IDO), and intent driven action (IntentDrivenAction, IDA) of the intent knowledge of the low-level intent system. This is a prerequisite for the high-level intent system to deliver the subintent. FIG. 1 is a schematic diagram of a hierarchically deployed multi-level intent system. After the high-level intent system receives an intent delivery command, because operation objects (for example, network elements) corresponding to an intent are managed by different low-level intent systems, the high-level intent system decomposes the intent and sends decomposed subintents to the low-level intent systems. In addition, the low-level intent system feeds back an intent fulfillment status to the high-level intent system.

An external system can update, for example, add, modify, and delete, the intent knowledge in the intent knowledge repository of the intent system. In the hierarchically deployed multi-level intent system, intent systems at different levels are hierarchical and domain-based, and the intent systems implement domain-based autonomy. Therefore, the external system cannot manage intent knowledge of all the intent systems at the different levels. Therefore, when updating the intent knowledge, the external system can update only intent knowledge in an intent knowledge repository of a current intent system, but cannot update intent knowledge in high-level and low-level intent systems related to the current intent system. As a result, subintent delivery efficiency of the intent system is low after the intent knowledge is updated, and even the intent knowledge is invalid or missing.

In view of this, how to associate intent knowledge between intent systems to prevent update of the intent knowledge from affecting intent decomposition and delivery of the high-level intent system is an urgent problem to be resolved in this application.

### SUMMARY

Embodiments of this application provide a method for associating intent knowledge between intent systems, an apparatus, and a system, to associate intent knowledge between intent systems when the intent knowledge is updated.

According to a first aspect, a method for associating intent knowledge between intent systems is provided. The method includes: When intent knowledge of a first intent in a first intent system is updated, a second intent system receives an intent knowledge update notification sent by the first intent system. The intent knowledge update notification includes an update type and an intent keyword of the first intent. The second intent system associates, based on the intent knowledge update notification, the intent knowledge that is of the first intent and that corresponds to the intent keyword of the first intent with intent knowledge of a second intent in the second intent system. The first intent is a subintent of the second intent. In this aspect, when the intent knowledge of the first intent in the first intent system is updated, the intent knowledge is associated between the intent systems, to avoid that the intent knowledge of the first intent in the second intent system is missing or invalid due to the update of the intent knowledge of the first intent.

In a possible implementation, before the second intent system receives the intent knowledge update notification sent by the first intent system, the method further includes: The second intent system sends an intent knowledge update subscription request to the first intent system. The intent knowledge update subscription request includes an identifier of the second intent system and the update type. The second intent system receives an intent knowledge update subscription response sent by the first intent system. The intent knowledge update subscription response includes at least one of the following information: a subscription identifier and a subscription status. The intent knowledge update notification further includes the subscription identifier. In this implementation, addition of the intent knowledge by the first intent system may be notified to the second intent system in a subscription-notification manner.

In another possible implementation, the intent knowledge update notification further includes an identifier of the first intent system. After the second intent system receives the intent knowledge update notification sent by the first intent system, the method further includes: The second intent system sends an intent knowledge update response to the first intent system. In this implementation, addition of the intent knowledge by the first intent system may be notified to the second intent system in a direct reporting manner.

In still another possible implementation, the update type is adding the intent knowledge of the first intent, and the intent knowledge update notification further includes an intent driven object and intent driven action of the first intent. That the second intent system associates, based on the intent knowledge update notification, the intent knowledge that is of the first intent and that corresponds to the intent keyword of the first intent with intent knowledge of a second intent in the second intent system includes: The second intent system finds, based on the intent driven object and intent driven action of the first intent, the intent knowledge of the second intent in the second intent system. The intent driven object of the first intent is included in an intent driven object of the second intent, and/or the intent driven action of the first intent is included in an intent driven action of the second intent. The second intent system associates the intent keyword, intent driven object, and intent driven action of the first intent with the intent knowledge of the second intent.

In still another possible implementation, the update type is deleting the intent knowledge of the first intent. That the second intent system associates, based on the intent knowledge update notification, the intent knowledge that is of the first intent and that corresponds to the intent keyword of the first intent with intent knowledge of a second intent in the second intent system includes: The second intent system searches, based on the intent keyword of the first intent, the second intent system for the intent knowledge that is of the first intent and that corresponds to the intent keyword of the first intent. The second intent system deletes the found intent knowledge of the first intent.

In still another possible implementation, the update type is modifying the intent knowledge of the first intent, and the intent knowledge update notification further includes at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent. That the second intent system associates, based on the intent knowledge update notification, the intent knowledge that is of the first intent and that corresponds to the intent keyword of the first intent with intent knowledge of a second intent in the second intent system includes at least one of the following operations: After the first intent system modifies the intent keyword of the first intent, the second intent system searches, based on the intent keyword of the unmodified first intent, the second intent system for the intent knowledge that is of the first intent and that corresponds to the intent keyword of the unmodified first intent, and the second intent system replaces the intent keyword of the unmodified first intent in the intent knowledge of the first intent with the intent keyword of the modified first intent. After the first intent system modifies the intent driven object and/or intent driven action of the first intent, the second intent system finds the intent knowledge of the second intent in the second intent system based on the intent driven object and/or intent driven action of the modified first intent. The intent driven object of the modified first intent is included in the intent driven object of the second intent, and/or the intent driven action of the modified first intent is included in the intent driven action of the second intent. The second intent system associates the intent driven object and/or intent driven action of the modified first intent with the intent knowledge of the second intent.

In still another possible implementation, the method further includes: The second intent system finds intent knowledge of a third intent in the second intent system based on the intent driven object and/or intent driven action of the unmodified first intent. The intent driven object of the unmodified first intent is included in an intent driven object of the third intent, and/or the intent driven action of the unmodified first intent is included in the intent driven action of the third intent. The second intent system dissociates the intent driven object and/or intent driven action of the unmodified first intent from the intent knowledge of the third intent.

In still another possible implementation, the method further includes: When the intent knowledge of the second intent is updated, the second intent system sends an intent knowledge capability query request to at least one third intent system. The intent knowledge capability query request includes at least one of the following information: the identifier of the second intent system, or an intent keyword, intent driven object, and intent driven action of an updated second intent. The first intent system is one of the at least one third intent system. The second intent system receives an intent knowledge capability query response sent by the at least one third system intent system. The intent knowledge capability query response includes at least one of the following information: the identifier of the second intent system, an identifier of the at least one third intent system, and the intent knowledge that is of the first intent and that is associated with at least one of the intent keyword, intent driven object, and intent driven action of the updated second intent. The second intent system associates the intent knowledge of the first intent with at least one of the intent keyword, intent driven object, and intent driven action of the updated second intent. In this implementation, when the intent knowledge of the second intent in the second intent system is updated, the intent knowledge is associated between the intent systems, to avoid that intent decomposition and delivery cannot be implemented because the update of the intent knowledge of the second intent cannot be associated with the intent knowledge of the first intent in the second intent system.

In still another possible implementation, the update type is modifying the intent knowledge of the second intent. That the second intent system associates the intent knowledge of the first intent with at least one of the intent keyword, intent driven object, and intent driven action of the updated second intent includes at least one of the following operations: After the second intent system modifies the intent keyword of the second intent, the second intent system associates the intent keyword of the modified second intent with the intent keyword of the first intent. After the second intent system modifies the intent driven object and/or intent driven action of the second intent, the second intent system associates the intent driven object and/or intent driven action of the modified second intent with the intent driven object and/or intent driven action of the first intent.

In still another possible implementation, the method further includes: The second intent system finds, in the second intent system and based on the intent driven object and/or intent driven action of the unmodified second intent, intent knowledge of a fourth intent in the at least one third intent system. The intent driven object of the unmodified second intent includes an intent driven object of the fourth intent, and/or the intent driven action of the unmodified second intent includes an intent driven action of the fourth intent. The second intent system dissociates the intent driven object and/or intent driven action of the unmodified second intent from the intent knowledge of the fourth intent.

In still another possible implementation, before the second intent system sends the intent knowledge capability query request to the at least one third intent system, the method further includes: The second intent system determines the at least one third intent system based on the intent driven object of the updated second intent. The intent driven object of the first intent in the at least one third intent system is included in the intent driven object of the updated second intent.

According to a second aspect, a method for associating intent knowledge between intent systems is provided. The method includes: determining that intent knowledge of a first intent in a first intent system is updated; and sending, by the first intent system, an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system. The first intent is a subintent of the second intent, and the intent knowledge update notification includes an update type and the intent keyword of the first intent.

In a possible implementation, before the first intent system sends the intent knowledge update notification to the second intent system, the method further includes: The first intent system receives an intent knowledge update subscription request sent by the second intent system. The intent knowledge update subscription request includes an identifier of the second intent system and the update type. The first intent system sends an intent knowledge update subscription response to the second intent system. The intent knowledge update subscription response includes at least one of the following information: a subscription identifier and a subscription status. The intent knowledge update notification further includes the subscription identifier.

In another possible implementation, after the first intent system sends the intent knowledge update notification to the second intent system, the method further includes: The first intent system receives an intent knowledge update response sent by the second intent system.

In still another possible implementation, the update type includes at least one of the following: adding the intent knowledge of the first intent, deleting the intent knowledge of the first intent, or modifying the intent knowledge of the first intent. If the update type is adding the intent knowledge of the first intent, the intent knowledge update notification further includes an intent driven object and intent driven action of the first intent. If the update type is modifying the intent knowledge of the first intent, the intent knowledge notification further includes at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

In still another possible implementation, the method further includes: When the intent knowledge of the second intent is updated, the first intent system receives an intent knowledge capability query request sent by the second intent system. The intent knowledge capability query request includes at least one of the following information: the identifier of the second intent system, or an intent keyword, intent driven object, and intent driven action of an updated second intent. The first intent system is one of at least one third intent system. The first intent system finds the intent knowledge that is of the first intent and that is associated with at least one of the intent keyword, intent driven object, and intent driven action of the updated second intent. The first intent system sends an intent knowledge capability query response to the second intent system. The intent knowledge capability query response includes at least one of the following information: the identifier of the second intent system, an identifier of the at least one third intent system, and the intent knowledge of the first intent.

According to a third aspect, a communication apparatus configured to perform the method according to any one of the first aspect or the possible implementations of the first aspect is provided. The communication apparatus may be the second intent system in any one of the first aspect or the possible implementations of the first aspect, or a module used in the second intent system, for example, a chip or a chip system. The communication apparatus includes a corresponding module, unit, or means (means) for performing the foregoing method. The module, unit, or means may be implemented by using hardware or software, or may be implemented by using hardware executing corresponding software. The hardware or the software includes one or more modules or units corresponding to the foregoing functions.

With reference to the third aspect, in a possible implementation, the communication apparatus includes a transceiver unit and a processing unit.

The transceiver unit is configured to: when intent knowledge of a first intent in a first intent system is updated, receive an intent knowledge update notification sent by the first intent system. The intent knowledge update notification includes an update type and an intent keyword of the first intent. The processing unit is configured to associate, based on the intent knowledge update notification, the intent knowledge that is of the first intent and that corresponds to the intent keyword of the first intent with intent knowledge of a second intent in a second intent system. The first intent is a subintent of the second intent.

In a possible implementation, the transceiver unit is further configured to send an intent knowledge update subscription request to the first intent system. The intent knowledge update subscription request includes an identifier of the second intent system and the update type. The transceiver unit is further configured to receive an intent knowledge update subscription response sent by the first intent system. The intent knowledge update subscription response includes at least one of the following information: a subscription identifier and a subscription status. The intent knowledge update notification further includes the subscription identifier

In another possible implementation, the intent knowledge update notification further includes an identifier of the first intent system. The transceiver unit is further configured to send an intent knowledge update response to the first intent system.

In still another possible implementation, the update type is adding the intent knowledge of the first intent, and the intent knowledge update notification further includes an intent driven object and intent driven action of the first intent. The processing unit is configured to find, based on the intent driven object and intent driven action of the first intent, the intent knowledge of the second intent in the second intent system. The intent driven object of the first intent is included in an intent driven object of the second intent, and/or the intent driven action of the first intent is included in an intent driven action of the second intent. The processing unit is further configured to associate the intent keyword, intent driven object, and intent driven action of the first intent with the intent knowledge of the second intent.

In still another possible implementation, the update type is deleting the intent knowledge of the first intent. The processing unit is configured to search, based on the intent keyword of the first intent, the second intent system for the intent knowledge that is of the first intent and that corresponds to the intent keyword of the first intent. The processing unit is further configured to delete the found intent knowledge of the first intent

In still another possible implementation, the update type is modifying the intent knowledge of the first intent, and the intent knowledge update notification further includes at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent. The processing unit is configured to perform at least one of the following operations: after the first intent system modifies the intent keyword of the first intent, searching, based on the intent keyword of the unmodified first intent, the second intent system for the intent knowledge that is of the first intent and that corresponds to the intent keyword of the unmodified first intent, and replace the intent keyword of the unmodified first intent in the intent knowledge of the first intent with the intent keyword of the modified first intent; or after the first intent system modifies the intent driven object and/or intent driven action of the first intent, finding the intent knowledge of the second intent in the second intent system based on the intent driven object and/or intent driven action of the modified first intent, where the intent driven object of the modified first intent is included in the intent driven object of the second intent, and/or the intent driven action of the modified first intent is included in the intent driven action of the second intent; and associating the intent driven object and/or intent driven action of the modified first intent with the intent knowledge of the second intent.

In still another possible implementation, the processing unit is further configured to find intent knowledge of a third intent in the second intent system based on the intent driven object and/or intent driven action of the unmodified first intent. The intent driven object of the unmodified first intent is included in an intent driven object of the third intent, and/or the intent driven action of the unmodified first intent is included in the intent driven action of the third intent. The processing unit is further configured to dissociate the intent driven object and/or intent driven action of the unmodified first intent from the intent knowledge of the third intent.

In still another possible implementation, the transceiver unit is configured to: when the intent knowledge of the second intent is updated, send an intent knowledge capability query request to at least one third intent system. The intent knowledge capability query request includes at least one of the following information: the identifier of the second intent system, or an intent keyword, intent driven object, and intent driven action of an updated second intent. The first intent system is one of the at least one third intent system. The transceiver unit is further configured to receive an intent knowledge capability query response sent by the at least one third system intent system. The intent knowledge capability query response includes at least one of the following information: the identifier of the second intent system, an identifier of the at least one third intent system, and the intent knowledge that is of the first intent and that is associated with at least one of the intent keyword, intent driven object, and intent driven action of the updated second intent. The processing unit is further configured to associate the intent knowledge of the first intent with at least one of the intent keyword, intent driven object, and intent driven action of the updated second intent.

In still another possible implementation, the update type is modifying the intent knowledge of the second intent, and the processing unit is further configured to perform at least one of the following operations: after the second intent system modifies the intent keyword of the second intent, associating the intent keyword of the modified second intent with the intent keyword of the first intent; or after the second intent system modifies the intent driven object and/or intent driven action of the second intent, associating the intent driven object and/or intent driven action of the modified second intent with the intent driven object and/or intent driven action of the first intent.

In still another possible implementation, the processing unit is further configured to find, in the second intent system and based on the intent driven object and/or intent driven action of the unmodified second intent, intent knowledge of a fourth intent in the at least one third intent system. The intent driven object of the unmodified second intent includes an intent driven object of the fourth intent, and/or the intent driven action of the unmodified second intent includes an intent driven action of the fourth intent. The processing unit is further configured to dissociate the intent driven object and/or intent driven action of the unmodified second intent from the intent knowledge of the fourth intent.

In still another possible implementation, the processing unit is further configured to determine the at least one third intent system based on the intent driven object of the updated second intent. The intent driven object of the first intent in the at least one third intent system is included in the intent driven object of the updated second intent.

With reference to the third aspect, in still another possible implementation, the communication apparatus includes an input interface, an output interface, and a processing circuit.

The input interface is configured to: when intent knowledge of a first intent in a first intent system is updated, receive an intent knowledge update notification sent by the first intent system. The intent knowledge update notification includes an update type and an intent keyword of the first intent. The processing circuit is configured to associate, based on the intent knowledge update notification, the intent knowledge that is of the first intent and that corresponds to the intent keyword of the first intent with intent knowledge of a second intent in a second intent system. The first intent is a subintent of the second intent.

In a possible implementation, the output interface is further configured to send an intent knowledge update subscription request to the first intent system. The intent knowledge update subscription request includes an identifier of the second intent system and the update type. The input interface is further configured to receive an intent knowledge update subscription response sent by the first intent system. The intent knowledge update subscription response includes at least one of the following information: a subscription identifier and a subscription status. The intent knowledge update notification further includes the subscription identifier.

In another possible implementation, the intent knowledge update notification further includes an identifier of the first intent system. The output interface is further configured to send an intent knowledge update response to the first intent system.

In still another possible implementation, the update type is adding the intent knowledge of the first intent, and the intent knowledge update notification further includes an intent driven object and intent driven action of the first intent. The processing circuit is configured to find, based on the intent driven object and intent driven action of the first intent, the intent knowledge of the second intent in the second intent system. The intent driven object of the first intent is included in an intent driven object of the second intent, and/or the intent driven action of the first intent is included in an intent driven action of the second intent. The processing circuit is further configured to associate the intent keyword, intent driven object, and intent driven action of the first intent with the intent knowledge of the second intent.

In still another possible implementation, the update type is deleting the intent knowledge of the first intent. The processing circuit is configured to search, based on the intent keyword of the first intent, the second intent system for the intent knowledge that is of the first intent and that corresponds to the intent keyword of the first intent. The processing circuit is further configured to delete the found intent knowledge of the first intent

In still another possible implementation, the update type is modifying the intent knowledge of the first intent, and the intent knowledge update notification further includes at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent. The processing circuit is configured to perform at least one of the following operations: after the first intent system modifies the intent keyword of the first intent, searching, based on the intent keyword of the unmodified first intent, the second intent system for the intent knowledge that is of the first intent and that corresponds to the intent keyword of the unmodified first intent, and replacing the intent keyword of the unmodified first intent in the intent knowledge of the first intent with the intent keyword of the modified first intent; or after the first intent system modifies the intent driven object and/or intent driven action of the first intent, finding the intent knowledge of the second intent in the second intent system based on the intent driven object and/or intent driven action of the modified first intent, where the intent driven object of the modified first intent is included in the intent driven object of the second intent, and/or the intent driven action of the modified first intent is included in the intent driven action of the second intent; and associating the intent driven object and/or intent driven action of the modified first intent with the intent knowledge of the second intent.

In still another possible implementation, the processing circuit is further configured to find intent knowledge of a third intent in the second intent system based on the intent driven object and/or intent driven action of the unmodified first intent. The intent driven object of the unmodified first intent is included in an intent driven object of the third intent, and/or the intent driven action of the unmodified first intent is included in the intent driven action of the third intent. The processing circuit is further configured to dissociate the intent driven object and/or intent driven action of the unmodified first intent from the intent knowledge of the third intent.

In still another possible implementation, the output interface is configured to: when the intent knowledge of the second intent is updated, send an intent knowledge capability query request to at least one third intent system. The intent knowledge capability query request includes at least one of the following information: the identifier of the second intent system, or an intent keyword, intent driven object, and intent driven action of an updated second intent. The first intent system is one of the at least one third intent system. The input interface is further configured to receive an intent knowledge capability query response sent by the at least one third system intent system. The intent knowledge capability query response includes at least one of the following information: the identifier of the second intent system, an identifier of the at least one third intent system, and the intent knowledge that is of the first intent and that is associated with at least one of the intent keyword, intent driven object, and intent driven action of the updated second intent. The processing circuit is further configured to associate the intent knowledge of the first intent with at least one of the intent keyword, intent driven object, and intent driven action of the updated second intent.

In still another possible implementation, the update type is modifying the intent knowledge of the second intent, and the processing circuit is further configured to perform at least one of the following operations: after the second intent system modifies the intent keyword of the second intent, associating the intent keyword of the modified second intent with the intent keyword of the first intent; or after the second intent system modifies the intent driven object and/or intent driven action of the second intent, associating the intent driven object and/or intent driven action of the modified second intent with the intent driven object and/or intent driven action of the first intent.

In still another possible implementation, the processing circuit is further configured to find, in the second intent system and based on the intent driven object and/or intent driven action of the unmodified second intent, intent knowledge of a fourth intent in the at least one third intent system. The intent driven object of the unmodified second intent includes an intent driven object of the fourth intent, and/or the intent driven action of the unmodified second intent includes an intent driven action of the fourth intent. The processing circuit is further configured to dissociate the intent driven object and/or intent driven action of the unmodified second intent from the intent knowledge of the fourth intent.

In still another possible implementation, the processing circuit is further configured to determine the at least one third intent system based on the intent driven object of the updated second intent. The intent driven object of the first intent in the at least one third intent system is included in the intent driven object of the updated second intent.

For example, the communication apparatus further includes a memory. The memory is coupled to at least one processor. The at least one processor is configured to run program instructions stored in the memory, to enable the communication apparatus to perform the method according to any one of the first aspect or the possible implementations of the first aspect.

In a possible implementation, the memory is configured to store program instructions and data. The memory is coupled to the at least one processor. The at least one processor may invoke and execute the program instructions stored in the memory, to enable the communication apparatus to perform the method according to any one of the first aspect or the possible implementations of the first aspect.

For example, the communication apparatus further includes a communication interface. The communication interface is used by the communication apparatus to communicate with another device. When the communication apparatus is the second intent system, the communication interface is a transceiver, an input/output interface, a circuit, or the like.

In a possible implementation, the communication apparatus includes at least one processor and a communication interface, configured to perform the method according to any one of the first aspect or the possible implementations of the first aspect. Specifically, the at least one processor is configured to communicate with outside through the communication interface. The at least one processor is configured to run a computer program, to enable the communication apparatus to perform the method according to any one of the first aspect or the possible implementations of the first aspect. It may be understood that the outside may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the third aspect, refer to technical effects brought by different design manners in the first aspect. Details are not described herein again.

According to a fourth aspect, a communication apparatus configured to perform the method according to any one of the second aspect or the possible implementations of the second aspect is provided. The communication apparatus may be the first intent system in any one of the second aspect or the possible implementations of the second aspect, or a module used in the first intent system, for example, a chip or a chip system. The communication apparatus includes a corresponding module, unit, or means for performing the foregoing method. The module, unit, or means may be implemented by using hardware or software, or may be implemented by using hardware executing corresponding software. The hardware or the software includes one or more modules or units corresponding to the foregoing functions.

With reference to the fourth aspect, in a possible implementation, the communication apparatus includes a processing unit and a transceiver unit.

The processing unit is configured to determine that intent knowledge of a first intent in a first intent system is updated. The transceiver unit is configured to send an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system. The first intent is a subintent of the second intent, and the intent knowledge update notification includes an update type and the intent keyword of the first intent.

In a possible implementation, the transceiver unit is further configured to receive an intent knowledge update subscription request sent by the second intent system. The intent knowledge update subscription request includes an identifier of the second intent system and the update type. The transceiver unit is further configured to send an intent knowledge update subscription response to the second intent system. The intent knowledge update subscription response includes at least one of the following information: a subscription identifier and a subscription status. The intent knowledge update notification further includes the subscription identifier

In another possible implementation, the transceiver unit is further configured to receive an intent knowledge update response sent by the second intent system.

In still another possible implementation, the update type includes at least one of the following: adding the intent knowledge of the first intent, deleting the intent knowledge of the first intent, or modifying the intent knowledge of the first intent. If the update type is adding the intent knowledge of the first intent, the intent knowledge update notification further includes an intent driven object and intent driven action of the first intent. If the update type is modifying the intent knowledge of the first intent, the intent knowledge notification further includes at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

In still another possible implementation, the transceiver unit is further configured to: when the intent knowledge of the second intent is updated, receive an intent knowledge capability query request sent by the second intent system. The intent knowledge capability query request includes at least one of the following information: the identifier of the second intent system, or an intent keyword, intent driven object, and intent driven action of an updated second intent. The first intent system is one of at least one third intent system. The processing unit is configured to find the intent knowledge that is of the first intent and that is associated with at least one of the intent keyword, intent driven object, and intent driven action of the updated second intent. The transceiver unit is further configured to send an intent knowledge capability query response to the second intent system. The intent knowledge capability query response includes at least one of the following information: the identifier of the second intent system, an identifier of the at least one third intent system, and the intent knowledge of the first intent.

With reference to the fourth aspect, in still another possible implementation, the communication apparatus includes an input interface, an output interface, and a processing circuit.

The processing circuit is configured to determine that intent knowledge of a first intent in a first intent system is updated. The output interface is configured to send an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system. The first intent is a subintent of the second intent, and the intent knowledge update notification includes an update type and the intent keyword of the first intent.

In a possible implementation, the input interface is further configured to receive an intent knowledge update subscription request sent by the second intent system. The intent knowledge update subscription request includes an identifier of the second intent system and the update type. The output interface is further configured to send an intent knowledge update subscription response to the second intent system. The intent knowledge update subscription response includes at least one of the following information: a subscription identifier and a subscription status. The intent knowledge update notification further includes the subscription identifier.

In another possible implementation, the input interface is further configured to receive an intent knowledge update response sent by the second intent system.

In still another possible implementation, the update type includes at least one of the following: adding the intent knowledge of the first intent, deleting the intent knowledge of the first intent, or modifying the intent knowledge of the first intent. If the update type is adding the intent knowledge of the first intent, the intent knowledge update notification further includes an intent driven object and intent driven action of the first intent. If the update type is modifying the intent knowledge of the first intent, the intent knowledge notification further includes at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

In still another possible implementation, the input interface is further configured to: when the intent knowledge of the second intent is updated, receive an intent knowledge capability query request sent by the second intent system. The intent knowledge capability query request includes at least one of the following information: the identifier of the second intent system, or an intent keyword, intent driven object, and intent driven action of an updated second intent. The first intent system is one of at least one third intent system. The processing circuit is configured to find the intent knowledge that is of the first intent and that is associated with at least one of the intent keyword, intent driven object, and intent driven action of the updated second intent. The input interface is further configured to send an intent knowledge capability query response to the second intent system. The intent knowledge capability query response includes at least one of the following information: the identifier of the second intent system, an identifier of the at least one third intent system, and the intent knowledge of the first intent.

For example, the communication apparatus further includes a memory. The memory is coupled to at least one processor. The at least one processor is configured to run program instructions stored in the memory, to enable the communication apparatus to perform the method according to any one of the second aspect or the possible implementations of the second aspect.

In a possible implementation, the memory is configured to store program instructions and data. The memory is coupled to the at least one processor. The at least one processor may invoke and execute the program instructions stored in the memory, to enable the communication apparatus to perform the method according to any one of the second aspect or the possible implementations of the second aspect.

For example, the communication apparatus further includes a communication interface. The communication interface is used by the communication apparatus to communicate with another device. When the communication apparatus is the first intent system, the communication interface is a transceiver, an input/output interface, a circuit, or the like.

In a possible implementation, the communication apparatus includes at least one processor and a communication interface, configured to perform the method according to any one of the second aspect or the possible implementations of the second aspect. Specifically, the at least one processor is configured to communicate with outside through the communication interface. The at least one processor is configured to run a computer program, to enable the communication apparatus to perform the method according to any one of the second aspect or the possible implementations of the second aspect. It may be understood that the outside may be an object other than the processor, or an object other than the communication apparatus.

In another possible design, the communication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the fourth aspect, refer to technical effects brought by different design manners in the second aspect. Details are not described herein again.

According to a fifth aspect, a communication system is provided, including the communication apparatus according to any one of the third aspect or the implementations of the third aspect, and the communication apparatus according to the fourth aspect.

According to a sixth aspect, a computer-readable storage medium is provided. The computer-readable storage medium stores instructions. When the instructions are run on a computer, the computer is enabled to perform the method according to each of the foregoing aspects.

According to a seventh aspect, a computer program product including instructions is provided. When the computer program product runs on a computer, the computer is enabled to perform the method according to the foregoing aspect.

According to an eighth aspect, a chip is provided. The chip is coupled to a memory, and performs the communication method according to any one of the first aspect or the implementations of the first aspect of embodiments of this application.

According to a ninth aspect, a chip is provided. The chip is coupled to a memory, and performs the communication method according to any one of the second aspect or the implementations of the second aspect of embodiments of this application.

It should be noted that "coupling" in embodiments of this application indicates a direct combination or an indirect combination of two components.

### BRIEF DESCRIPTION OF DRAWINGS

FIG. 1 is a schematic diagram of a hierarchically deployed multi-level intent system;
FIG. 2 is a schematic diagram of IDM;
FIG. 3 is a schematic diagram of intent levels defined in an IDMS;
FIG. 4 is a schematic diagram of a knowledge management functional block;
FIG. 5 is a schematic diagram of an ENI architecture based on an intent policy;
FIG. 6 is a schematic diagram of an intent knowledge management architecture in an ENI converged system based on an intent policy;
FIG. 7 is a schematic diagram of an intent knowledge management architecture in an ENI converged system based on an intent policy according to an embodiment of this application;
FIG. 8 is a schematic flowchart of a method for associating intent knowledge between intent systems according to an embodiment of this application;
FIG. 9A and FIG. 9B is a schematic flowchart of another method for associating intent knowledge between intent systems according to an embodiment of this application;
FIG. 10A and FIG. 10B is a schematic flowchart of still another method for associating intent knowledge between intent systems according to an embodiment of this application;
FIG. 11A and FIG. 11B is a schematic flowchart of yet another method for associating intent knowledge between intent systems according to an embodiment of this application;
FIG. 12A and FIG. 12B is a schematic flowchart of still yet another method for associating intent knowledge between intent systems according to an embodiment of this application;
FIG. 13A and FIG. 13B is a schematic flowchart of a further method for associating intent knowledge between intent systems according to an embodiment of this application;
FIG. 14A and FIG. 14B is a schematic flowchart of a still further method for associating intent knowledge between intent systems according to an embodiment of this application;
FIG. 15 is a schematic diagram of a structure of a communication apparatus according to an embodiment of this application;
FIG. 16 is a schematic diagram of a structure of another communication apparatus according to an embodiment of this application; and
FIG. 17 is a schematic diagram of a structure of still another communication apparatus according to an embodiment of this application.

### DESCRIPTION OF EMBODIMENTS

To reduce management complexity of a network infrastructure, 3GPP SA5 initiates research of intent driven management (intent driven management, IDM). A service-oriented interface is used in the IDM to deliver an intent. FIG. 2 is a schematic diagram of the IDM. An intent driven management service consumer (IDM service consumer) delivers an intent to an intent driven management service provider (IDM service producer) by invoking an intent driven management service (intent-driven management service, IDMS) interface. The IDM service provider translates the intent into a specific execution policy and delivers the policy to the network infrastructure (network infrastructure). The network infrastructure may be physical (physical) and/or virtual (virtual). An intent model is used to model information that should be contained in intent expression (intentExpression), and should include at least an "intent driven action (IntentDrivenAction, IDA)" and an "intent driven object (IntentDrivenObject, IDO)". The IDA includes an action name (IntentDrivenActionName) and a series of properties (IntentDrivenActionProperties) needed to complete the action. The IDO includes an object name (IntentDrivenObjectName) and a series of properties (IntentDrivenObjectProperties) that identify a specific object instance. Therefore, formal expression of the intent model is as follows:
<intentExpression> := <IntentDrivenAction><IntentDrivenObject>
<IntentDrivenAction> := <IntentDrivenActionName><IntentDrivenActionProperties>
<IntentDrivenObject> := <IntentDrivenObjectName><IntentDrivenObjectProperties>

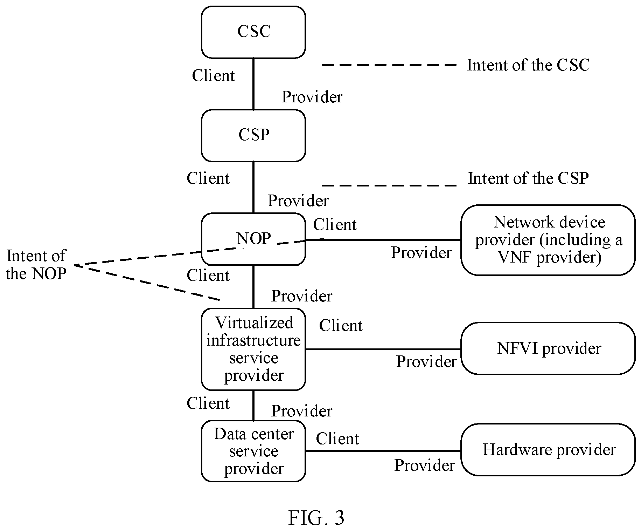

FIG. 3 is a schematic diagram of intent levels defined in the IDMS. The IDMS provides three levels of end-to-end (end-to-end) intent expression: a communication service customer (communication service customer, CSC), a communication service provider (communication service provider, CSP), and a network operator (network operator, NOP). The CSC includes an end user (end user), small and medium-sized enterprises, a large-scale enterprise, a vertical industry, another CSP, and the like.

An intent of the communication service consumer (intent-CSC) expresses only a service-level management requirement, and does not relate to implementation details of a service and network.

An intent of the communication service provider (intent-CSP) expresses only a network-level management requirement, and does not relate to professional knowledge of network operation.

An intent of the network operator (intent-NOP) expresses only a network resource-level management requirement, and does not relate to operation details of a physical network device and virtualized infrastructure, namely, an intent transmitted over an EMS northbound interface.

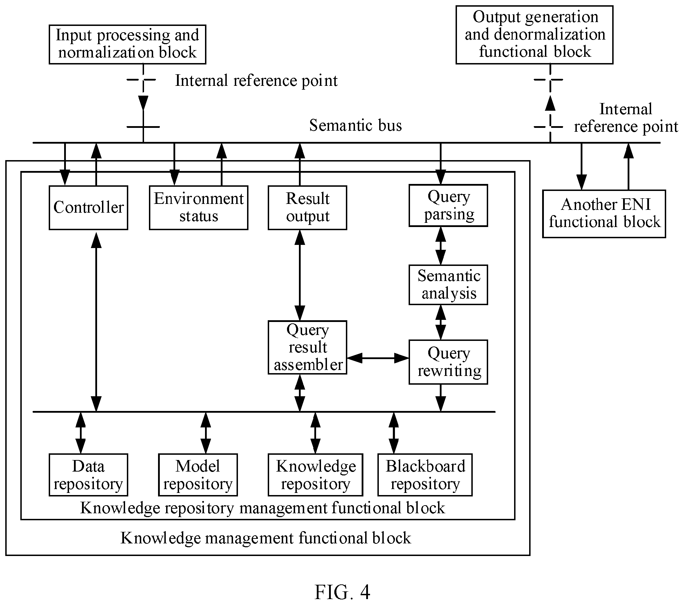

Experiential networked intelligence (experiential networked intelligence, ENI) is a cognitive network management system architecture defined by an industry specification group, and uses technical means such as artificial intelligence and context awareness to optimize and adjust network operation. The ENI includes eight functional blocks: a data ingestion & normalization functional block (data ingestion & normalization FB), an output generation & denormalization functional block (output generation & denormalization FB), a knowledge management functional block (knowledge management FB), a context awareness functional block (context awareness FB), a cognition management functional block (cognition management FB), a situational awareness functional block (situational awareness FB), a policy management functional block (policy management FB), and a model driven engineering functional block (model driven engineering FB). This application focuses on the knowledge management FB. FIG. 4 is a schematic diagram of the knowledge management functional block. The knowledge management FB is configured to manage at least four types of data and knowledge repositories (data and knowledge repositories): a data repository (data repository), a knowledge repository (knowledge repository), a model repository (model repository), and a blackboard repository (blackboard repository). The knowledge repository is configured to store, manipulate, edit, and retrieve knowledge and wisdom. The knowledge repository interacts with the context awareness FB, the cognition management FB, the situational awareness FB, the model driven engineering FB, and the policy management FB.

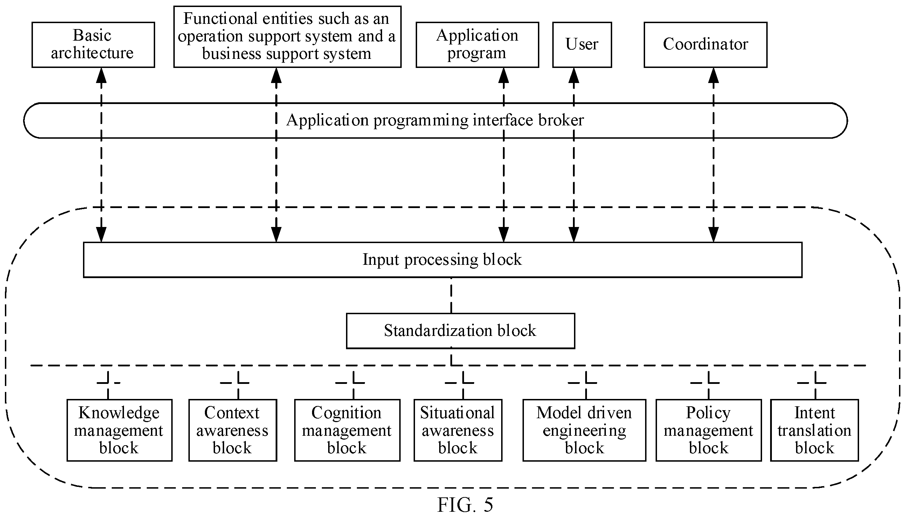

FIG. 5 is a schematic diagram of an intent policy (intent policy)-based ENI architecture. The intent policy-based ENI architecture is proposed to promote normalization of an intent driven network architecture and enhance an original ENI architecture.

A now intent translation functional block (intent translation FB) is configured to process an intent policy, including intent translation, intent assurance, and life cycle management of the intent policy.

An enhanced knowledge management FB stores an intent knowledge model in the model repository, and stores intent knowledge data in the knowledge repository.

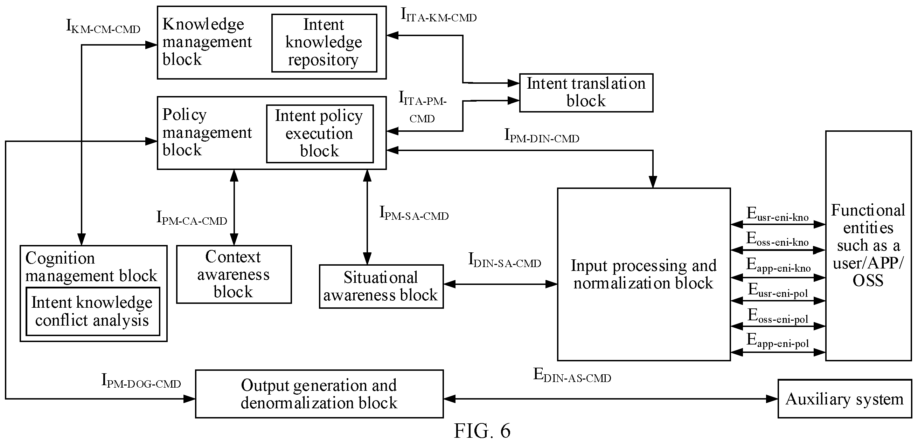

FIG. 6 is a schematic diagram of an intent knowledge management architecture in an ENI converged system based on an intent policy. A current intent system or a low-level intent system has an intent knowledge management function and an interface, and supports an external system such as a user (user)/an application (application, APP)/an operation support system (operation support system, OSS)/a business support system-like (business support system-like, BSS-like) function entity (Functionality) in updating intent knowledge through the following interfaces: Eᵤₛₑᵣ₋ₑₙᵢ₋ₖₙₒ, Eₐₚₚ₋ₑₘ₋ₖₙₒ, and Eₒₛₛ₋ₑₘ₋ₖₙₒ. The external system can add, modify, and delete intent knowledge in the knowledge repository of the intent system.

Each piece of intent knowledge stored in the knowledge repository (knowledge repository) of the intent system has a one-to-one corresponding intent keyword, identifying the intent knowledge. The intent knowledge includes an execution constraint and intentOperations [executionConditon, operation Type, operation]. "operationType" of the intent knowledge repository is of an enumerated type. A value of "operationType" is "subintent", indicating that a corresponding operation describes a script of subintent delivery, including an intent keyword of the subintent. Intent knowledge corresponding to the subintent exists in an intent knowledge repository of the low-level intent system.

In addition, an intent knowledge repository of a high-level intent system stores an intent keyword, an IDO, and an IDA of the intent knowledge of the low-level intent system. This is a prerequisite for the high-level intent system to deliver a subintent. FIG. 1 is a schematic diagram of a hierarchically deployed multi-level intent system. After the high-level intent system receives an intent delivery command, because an operation object (for example, a network element) corresponding to the intent is managed by different low-level intent systems, the high-level intent system decomposes the intent and sends decomposed subintents to the low-level intent systems. In addition, the low-level intent system feeds back an intent fulfillment status to the high-level intent system.

However, in the hierarchically deployed multi-level intent system, intent systems at different levels are hierarchical and domain-based, and the intent systems implement domain-based autonomy. Therefore, the external system cannot manage intent knowledge of all the intent systems at the different levels. Therefore, when updating intent knowledge, the external system can update only the intent knowledge in the knowledge repository of the current intent system, but cannot update intent knowledge of high-level and low-level intent systems related to the current intent system. As a result, the updated intent knowledge may affect the delivery of the subintent because the intent knowledge in the knowledge repositories of the high-level intent system and low-level intent system is not associated and updated after the intent knowledge is updated. Consequently, after the intent knowledge is updated, subintent delivery efficiency of the intent system is low, or even the intent knowledge is invalid or missing.

Specifically, update of the intent knowledge by the low-level intent system has following impacts on the high-level intent system:
(1) The low-level intent system adds the intent knowledge, but the intent does not exist in the high-level intent system. The high-level intent system cannot decompose and deliver the intent as a subintent in the high-level intent system.

The added intent knowledge of the low-level intent system means that the intent does not exist in the knowledge repository of the low-level intent system. To be specific, there is no Intentkeyword, IDA, IDO, constraint, or intentOperations. The added intent knowledge includes an added Intentkeyword, IDA, and IDO, and a corresponding constraint and intentOperations. If the intent keyword already exists in the knowledge repository, and only the constraint and intentOperations are added, this does not belong to a scope specified by the added intent knowledge of the low-level intent system.

(2) The low-level intent system modifies the intent knowledge. The intent may also be used as a subintent in the high-level intent system, but decomposition of the intent in the high-level intent system has a deviation.

The modification of the intent knowledge by the low-level intent system means that the intent already exists in the knowledge repository of the low-level intent system, including an Intentkeyword, an IDA, an IDO, a constraint, and intentOperations, but the Intentkeyword/IDA/IDO is modified.

For example, knowledge in IntentDrivenObjectProperties of the IDO is modified. Original IntentDrivenObjectProperties is JinQiao, and modified IntentDrivenObjectProperties is MinHang.

(3) The low-level intent system deletes the intent knowledge. The intent is still used as a subintent in the high-level intent system. As a result, the high-level intent system fails to deliver the subintent.

The deletion of the intent knowledge by the low-level intent system means that the intent exists in the knowledge repository of the low-level intent system. To be specific, there are an Intentkeyword, an IDA, an IDO, a constraint, and intentOperations, and the deletion of the intent knowledge means that all knowledge in the Intentkeyword, IDA, IDO, constraint, and intentOperations is deleted.

Update of intent knowledge by the high-level intent system has the following impact:
After the high-level intent system adds or modifies the intent knowledge, the intent knowledge can be stored only in the knowledge repository of the high-level intent system but cannot be associated with intent knowledge of the low-level intent system. As a result, intent decomposition and delivery cannot be implemented.

This application provides a method for associating intent knowledge between intent systems, an apparatus, and a system. When intent knowledge of a first intent in a first intent system is updated, a second intent system receives an intent knowledge update notification sent by the first intent system. The intent knowledge update notification includes an update type and an intent keyword of the first intent. The second intent system associates, based on the intent knowledge update notification, the intent knowledge that is of the first intent and that corresponds to the intent keyword of the first intent with intent knowledge of a second intent in the second intent system. The first intent is a subintent of the second intent. In this way, when the intent knowledge of the first intent in the first intent system is updated, the intent knowledge is associated between the intent systems, to avoid that the intent knowledge of the first intent in the second intent system is missing or invalid due to the update of the intent knowledge of the first intent.

Functional blocks in this application are described as follows:
- A knowledge management FB manages all knowledge within a scope of ENI, and completes query, update, and storage of intent knowledge in an intent knowledge repository FB in this application. In this application, an intent knowledge association function is enhanced.
- A data ingestion and normalization FB performs operations such as obtaining and normalization on input data of an external system. In this application, intent knowledge update notification and intent knowledge query operations between intent systems are enhanced.
- An output generation and denormalization FB is responsible for converting an internal command of a system into a format that can be processed by the external system, and sending the command to the external system. In this application, command conversion of an intent knowledge update result and intent knowledge query result is enhanced.

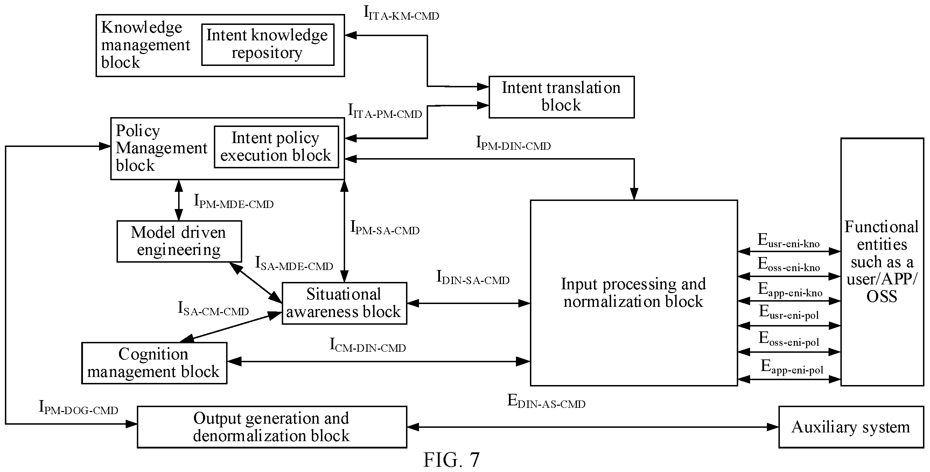

Therefore, FIG. 7 is a schematic diagram of an intent knowledge management architecture in an intent policy-based ENI converged system according to an embodiment of this application. In interfaces of the ENI system of the intent policy, an external interface Eₑₙᵢ₋ₑₙᵢ₋ₖₙₒ is added to support knowledge management between intent systems at a plurality of levels.

The intent policy-based ENI converged system in this application may be deployed on a business support system BSS, deployed on a network management system NMS of an operator, deployed on an element management system EMS of a network device vendor, or may be deployed on a network element NE.

A network element deployed with the intent-based ENI converged system supports query, update, and storage of intent knowledge. In addition, network elements at a plurality of levels support functions of notifying and querying update of intent knowledge.

The method for associating intent knowledge between intent systems provided in embodiments of this application is described in detail below.

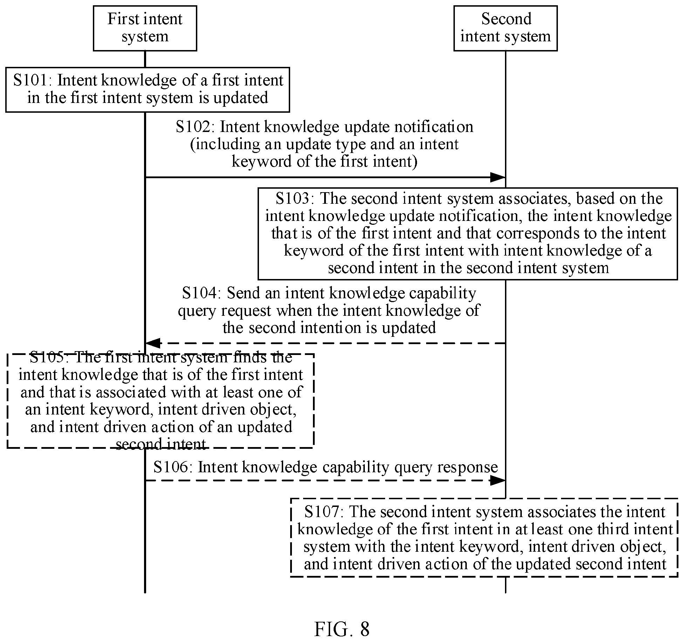

FIG. 8 is a schematic flowchart of a method for associating intent knowledge between intent systems according to an embodiment of this application. The method may include the following steps.

S101: A first intent system determines that intent knowledge of a first intent in the first intent system is updated.

In this embodiment, the first intent system may be a low-level intent system, and a second intent system may be a high-level intent system. Specifically, for example, in FIG. 3, the first intent system may be the CSP, and the second intent system may be the CSC. Alternatively, the first intent system may be the CSC, and the second intent system may be the NOP.

An external system (user/APP/OSSBSS-like) may update the intent knowledge of the first intent in the first intent system. Specifically, the update of the intent knowledge of the first intent in the first intent system may be that addition, modification, or deletion of the intent knowledge of the first intent by the first intent system. The intent knowledge of the first intent is intent knowledge of any intent that already exists or is about to be stored in the first intent system.

S102: The first intent system sends an intent knowledge update notification to the second intent system. The intent knowledge update notification includes an update type and an intent keyword of the first intent. Correspondingly, the second intent system receives the intent knowledge update notification sent by the first intent system.

The update of the intent knowledge of the first intent system may cause subintent knowledge of the second intent system to be missing or invalid. When the first intent system adds the intent knowledge, the second intent system cannot perform subintent decomposition and delivery, resulting in insufficient utilization of the intent knowledge. When the first intent system modifies the intent knowledge, the second intent system may perform subintent decomposition and delivery, but the decomposition may deviate, and intent negotiation needs to be performed for a plurality of times, resulting in low efficiency. When the first intent system deletes the intent knowledge, the second intent system may perform subintent decomposition and delivery, but the first intent system cannot implement the subintent.

In this embodiment, when determining that the intent knowledge of the first intent in the first intent system is updated, the first intent system sends the intent knowledge update notification to the second intent system, to notify the second intent system that the intent knowledge of the first intent in the first intent system is updated. The intent knowledge update notification includes the update type and the intent keyword of the first intent. In addition, if the intent knowledge of the first intent is added, the intent knowledge update notification may further include an IDO and IDA of the first intent. If at least one of an intent keyword/IDO/IDA of the first intent is modified, the intent knowledge update notification may further include the intent keyword of the unmodified first intent and at least one of an intent keyword/IDO/IDA of a modified first intent.

S103: The second intent system associates, based on the intent knowledge update notification, the intent knowledge that is of the first intent and that corresponds to the intent keyword of the first intent with intent knowledge of a second intent in the second intent system. The first intent is a subintent of the second intent.

As described above, if the first intent system adds the intent knowledge of the first intent, but the first intent does not exist in the second intent system, the second intent system cannot use the first intent as a subintent in the second intent system to perform intent decomposition and delivery. Therefore, when the first intent system adds the intent knowledge of the first intent, the added intent knowledge of the first intent needs to be associated with the intent knowledge of the second intent in the second intent system.

If the first intent system modifies the intent knowledge of the first intent, the first intent may also be used as a subintent in the second intent system. As a result, intent decomposition in the second intent system is deviated. Therefore, when the first intent system modifies the intent knowledge of the first intent, intent knowledge of a modified first intent needs to be associated with the intent knowledge of the second intent in the second intent system.

If the first intent system deletes the intent knowledge of the first intent, the first intent is still used as a subintent in the second intent system. As a result, the subintent in the second intent system fails to be delivered. Therefore, when the first intent system deletes the intent knowledge of the first intent, the intent knowledge of the first intent needs to be dissociated from the intent knowledge of the second intent in the second intent system.

The second intent system associates the intent knowledge that is of the first intent and that corresponds to the intent keyword of the first intent with the intent knowledge of the second intent in the second intent system. This may avoid that the intent knowledge of the first intent in the second intent system is missing or invalid due to the update of the intent knowledge of the first intent.

Optionally, the following steps may be further included.

S104: When the intent knowledge of the second intent in the second intent system is updated, the second intent system sends an intent knowledge capability query request to at least one third intent system. The intent knowledge capability query request includes at least one of the following information: an identifier of the second intent system, or an intent keyword, intent driven object, and intent driven action of an updated second intent. The first intent system is one of the at least one third intent system. Correspondingly, the first intent system receives the intent knowledge capability query request sent by the second intent system.

The external system (user/APP/OSSBSS-like) may also update the intent knowledge of the second intent in the second intent system. The update of the intent knowledge of the intent in the second intent system by the external system is independent of the update of the intent knowledge of the intent in the first intent system. Specifically, the update of the intent knowledge of the second intent in the second intent system may be that the second intent system adds or modifies the intent knowledge of the second intent. The intent knowledge of the second intent is intent knowledge of any intent that already exists or is about to be stored in the second intent system.

As described above, after the second intent system adds or modifies the intent knowledge of the second intent, the intent knowledge can exist only as the intent knowledge in a knowledge repository of the second intent system, and cannot be associated with the intent knowledge of the first intent system. As a result, intent decomposition and delivery cannot be implemented.

In this embodiment, when the second intent system updates the intent knowledge of the second intent, the second intent system sends the intent knowledge capability query request to the at least one third intent system, to request to query the at least one third intent system for the intent knowledge that is of the first intent and that is associated with the intent knowledge of the updated second intent.

S105: The first intent system finds the intent knowledge that is of the first intent and that is associated with at least one of the intent keyword, intent driven object, and intent driven action of the updated second intent.

The first intent system finds, based on at least one of the intent keyword, intent driven object, and intent driven action that are of the updated second intent and that are carried in the received intent knowledge capability query request, the intent knowledge that is of the first intent and that is associated with at least one of the intent keyword, intent driven object, and intent driven action of the updated second intent.

S106: The first intent system sends an intent knowledge capability query response to the second intent system. The intent knowledge capability query response includes at least one of the following information: the identifier of the second intent system, an identifier of the at least one third intent system, and the intent knowledge of the first intent in the at least one third intent system. Correspondingly, the second intent system receives the intent knowledge capability query response sent by the at least one third system.

The first intent system feeds back the found associated intent knowledge of the first intent to the second intent system.

S107: The second intent system associates the intent knowledge of the first intent in the at least one third intent system with the intent keyword, intent driven object, and intent driven action of the updated second intent.

Specifically, if the second intent system adds the intent knowledge, the intent knowledge capability query request includes an Intentkeyword, IDA, and IDO of the added second intent. The first intent system finds, based on the Intentkeyword, IDA, and IDO of the added second intent in the second intent system, the intent knowledge of the related first intent in the first intent system. The second intent system associates the intent knowledge of the first intent with at least one of the Intentkeyword, IDA, and IDO of the added second intent.

Specifically, if the second intent system modifies the Intentkeyword of the second intent, the intent knowledge capability query request includes an Intentkeyword of a modified second intent. The first intent system finds the Intentkeyword of the first intent based on the Intentkeyword of the modified second intent. The second intent system associates the Intentkeyword of the modified second intent with the Intentkeyword of the first intent.

If the second intent system modifies the IDO/IDA of the second intent, the intent knowledge capability query request includes an IDO/IDA of a modified second intent. The first intent system finds the IDO/IDA of the first intent based on the IDO/IDA of the modified second intent. The second intent system associates the IDO/IDA of the modified second intent with the IDO/IDA of the first intent.

The second intent system associates the intent knowledge of the first intent in the at least one third intent system with the intent keyword, intent driven object, and the intent driven action of the updated second intent, to avoid that intent decomposition and delivery cannot be implemented because the intent knowledge of the updated second intent cannot be associated with the intent knowledge of the first intent in the second intent system.

According to the method for associating intent knowledge between intent systems provided in this embodiment of this application, the intent knowledge may be associated between intent systems when the intent knowledge of the first intent in the first intent system is updated or the intent knowledge of the second intent in the second intent system is updated, to avoid that the intent knowledge of the first intent in the second intent system is missing or invalid due to the update of the intent knowledge of first intent, or avoid that intent decomposition and delivery cannot be implemented because the intent knowledge of the updated second intent cannot be associated with the intent knowledge of the first intent in the second intent system.

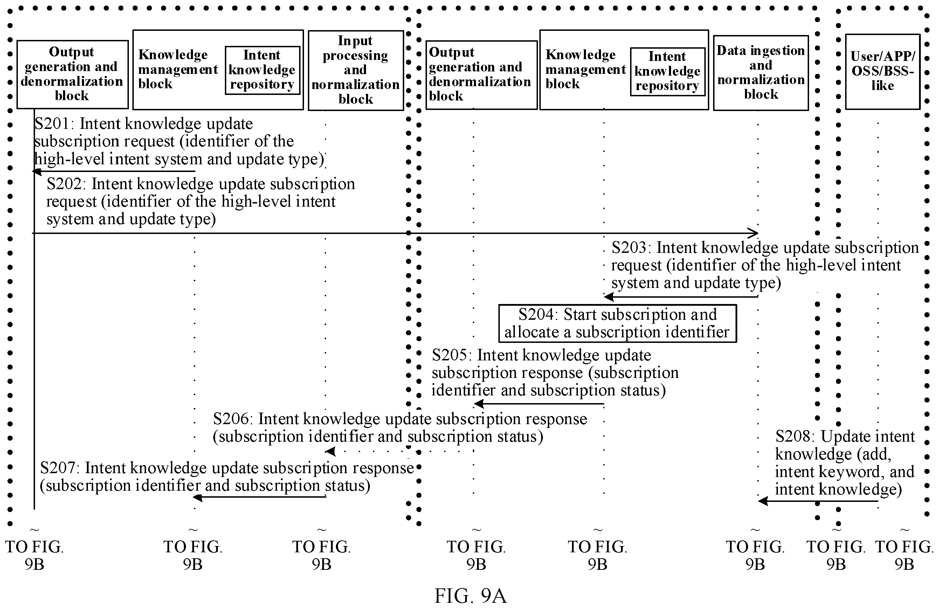

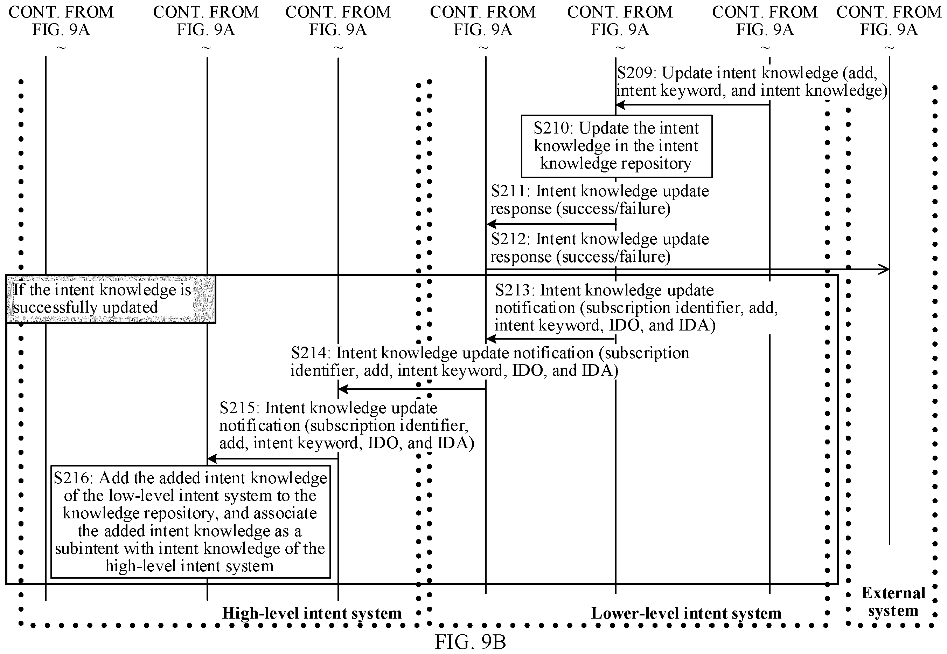

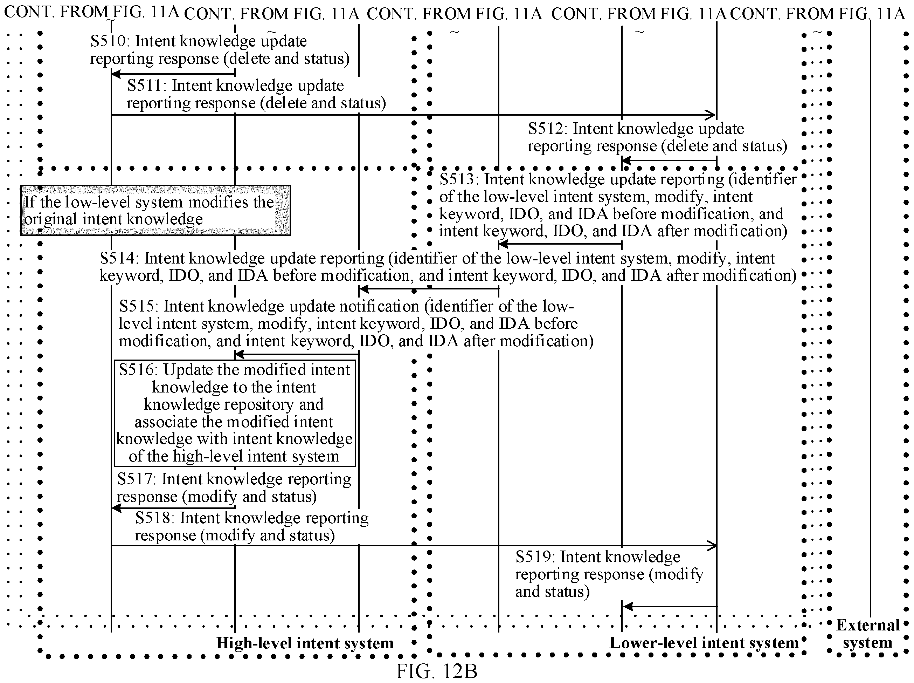

FIG. 9A and FIG. 9B to FIG. 12A and FIG. 12B are corresponding to a scenario in which a low-level intent system updates intent knowledge and notifies a knowledge repository of a high-level intent system.

FIG. 9A and FIG. 9B is a schematic flowchart of another method for associating intent knowledge between intent systems according to an embodiment of this application. In this embodiment, a low-level intent system adds intent knowledge, and notifies a high-level intent system in a subscription-notification manner. Specifically, the method may include the following steps.

Steps S201 and S202: A knowledge management FB of the high-level intent system sends an intent knowledge update subscription request updateKnowledgeSubscription (consumerReference and filter) to the low-level intent system, where consumerReference is an identifier of the high-level intent system, and filter (namely, update type) is a filter constraint (filter constraint) of a subscription notification, including [add (add), modify (modify), and delete (delete)].

Step 203: A data ingestion and normalization FB of the low-level intent system converts a format of the received message, and sends the updateKnowledgeSubscription to a knowledge management FB.

Step 204: The knowledge management FB of the low-level intent system starts subscription based on the updateKnowledgeSubscription, and allocates a subscription identifier (SubscriptionID).

Steps S205 to S207: The knowledge management FB of the low-level intent system sends an intent knowledge update subscription response updateKnowledgeSubscription Response (SubscriptionID and status) to the high-level intent system, where the response carries the SubscriptionID and the status. "SubscriptionID" is the subscription identifier of the low-level intent system, and "status" indicates whether the subscription is successfully started (subscription status for short).

Steps S208 to S212: An external system (user/APP/OSSBSS-like) adds the intent knowledge to the low-level intent system. The addition carries the update type (add), an intent keyword, and the intent knowledge.

If the low-level intent system successfully adds the intent knowledge:
Steps S213 to S215: The knowledge management FB of the low-level intent system sends an intent knowledge update notification updateKnowledgeNotification (SubscriptionID, add, intentkeyword, IDO, and IDA) to the knowledge management FB of the high-level intent system, where SubscriptionID is the subscription identifier of the low-level intent system, add identifies that the low-level intent system adds the intent knowledge, and intentkeyword, IDO, and IDA indicate the added intent knowledge of the low-level intent system.
Step S216: The knowledge management FB of the high-level intent system adds the added intent knowledge of the low-level intent system to a knowledge repository, and performs subintent knowledge association with intent knowledge of the high-level intent system by using the added intent knowledge as a subintent.

Specifically, the high-level intent system finds intent knowledge of a second intent in the high-level intent system (where the second intent is an intent in the high-level intent system) based on the IDO and IDA in the added intent knowledge (first intent knowledge). The IDO of the first intent is included in an IDO of the second intent, and/or the IDA of the first intent is included in an IDA of the second intent. That is, the first intent exists in a form of a subintent in the high-level intent system. The high-level intent system associates the intentkeyword, IDO, and IDA of the first intent with the intent knowledge of the second intent.

In this embodiment, the low-level intent system may notify the high-level intent system after adding the intent knowledge, so that the added intent knowledge can exist in the knowledge repository of the high-level intent system as a subintent, so that an intent decomposition and delivery capability of the high-level intent system may be enhanced.

An intent knowledge update subscription operation is added to an interface between a converged system and the intent system, to feed back the added intent knowledge by using the intent knowledge update notification after the low-level intent system adds the intent knowledge.

A subintent knowledge association function is added inside the converged system to associate the added intent knowledge of the low-level intent system with the intent knowledge of the high-level intent system as a subintent.

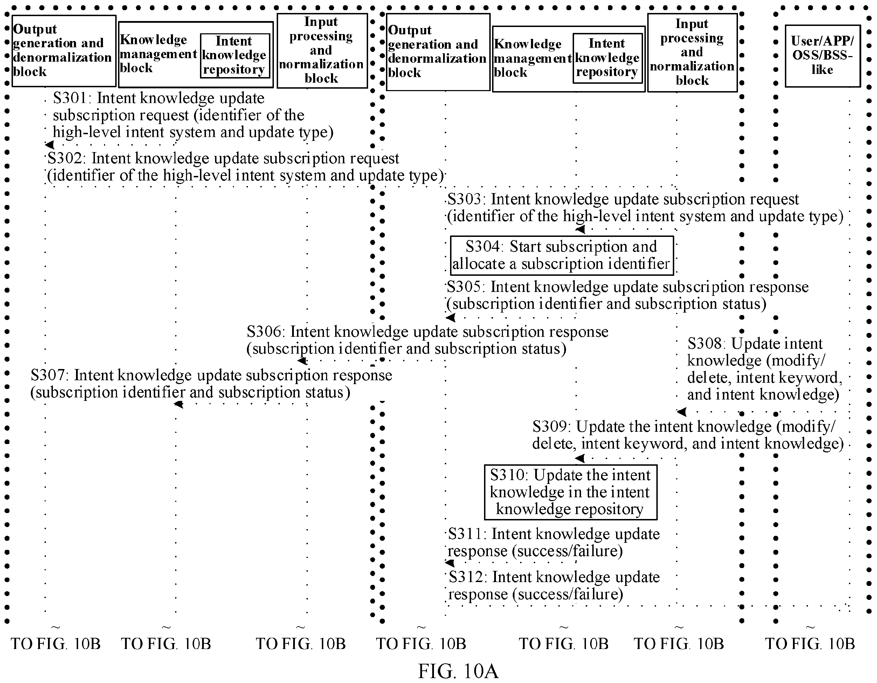

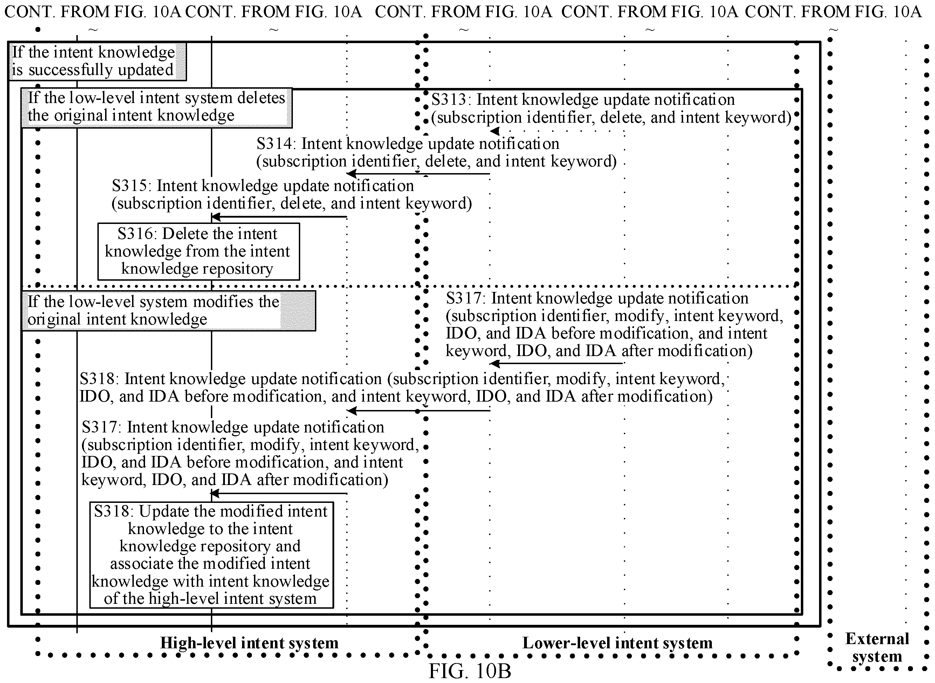

FIG. 10A and FIG. 10B is a schematic flowchart of still another method for associating intent knowledge between intent systems according to an embodiment of this application. In this embodiment, a low-level intent system modifies/deletes intent knowledge, and notifies a knowledge repository of a high-level intent system in a subscription-notification manner. Specifically, the method may include the following steps.

For steps 301 to 307, refer to steps S201 to S207 in the embodiment shown in FIG. 9A and FIG. 9B.

Steps S308 to S312: The external system (user/APP/OSSBSS-like) indicates the low-level intent system to update the intent knowledge. The update includes the update type (modify/delete), an intent keyword, and the intent knowledge.

If the low-level intent system successfully updates the intent knowledge:
If the low-level intent system deletes the original intent knowledge:
Steps S313 to S315: The knowledge management FB of the low-level intent system sends an intent knowledge update notification updateKnowledgeNotification (SubscriptionID, delete, and intentkeyword) to the knowledge management FB of the high-level intent system, where SubscriptionID is a subscription identifier allocated by the low-level intent system, delete indicates that the low-level intent system deletes the intent knowledge, and intentkeyword indicates the intent knowledge deleted by the low-level intent system.
Step S316: The high-level intent system also deletes, from the knowledge repository, the intent knowledge deleted from the low-level intent system.

Specifically, the high-level intent system searches, based on an intentkeyword of the deleted intent knowledge (intent knowledge of a first intent) in the low-level intent system, the high-level intent system for the intent knowledge that is of the first intent and that corresponds to the intentkeyword. The high-level intent system deletes the found intent knowledge of the first intent.

If the low-level intent system modifies the original intent knowledge:
Steps S317 to S319: The knowledge management FB of the low-level intent system sends an intent knowledge update notification updateKnowledgeNotification (SubscriptionID, modify, intentkeywordbefore, and intentkeywordafter) to the knowledge management FB of the high-level intent system, where modify indicates that the low-level intent system modifies the intent knowledge. If the intent keyword is modified, intentkeywordbefore is the intentkeyword of the unmodified intent, and intentkeywordafter is an intentkeyword of a modified intent. If the IDO/IDA is modified, the intent knowledge update notification includes the intent keyword, intentkeywordbefore is an IDO/IDA before the modification, and intentkeywordafter is an IDO/IDA after the modification.
Step S320: The high-level intent system modifies the modified intent knowledge in the low-level intent system to the knowledge repository, and performs subintent knowledge association with intent knowledge of the high-level intent system.

Specifically, if the update type included in the intent knowledge update notification is modifying the original intent knowledge (intent knowledge of the first intent) in the low-level intent system, the modification includes modifying one or more of the intent keyword, IDO, and IDA in the intent knowledge of the first intent. Therefore, the high-level intent system performs at least one of the following operations based on specific modified content.

If the low-level intent system modifies the intent keyword of the original intent knowledge, the intent knowledge update notification includes the intent keyword of the unmodified first intent and the intent keyword of the modified first intent. The high-level intent system searches, based on the intent keyword of the unmodified first intent, the intent knowledge repository of the high-level intent system for the intent knowledge that is of the first intent and that corresponds to the intent keyword of the unmodified first intent. The first intent exists as a subintent in the high-level intent system. The high-level intent system replaces the intent keyword in the unmodified intent knowledge of the first intent with the intent keyword of the modified first intent.

If the low-level intent system modifies the IDO/IDA of the original intent knowledge, the intent knowledge update notification includes the intent keyword of the first intent, the IDO/IDA of the unmodified first intent, and the IDO/IDA of the modified first intent. The high-level intent system searches, based on the IDO/IDA of the modified first intent, the intent knowledge repository of the high-level intent system for intent knowledge of a second intent in the high-level intent system. The IDO of the modified first intent is included in an IDO of the second intent, and/or the IDA of the modified first intent is included in an IDA of the second intent. That is, the first intent exists in a form of a subintent in the high-level intent system. The high-level intent system associates the IDO/IDA of the modified first intent with the intent knowledge of the second intent. For example, IntentDrivenObjectProperties in the IDO of the unmodified first intent is Lujiazui, and IntentDrivenObjectProperties in the IDO of the modified first intent is Xujiahui. IntentDrivenObjectProperties in the IDO of the second intent is Xuhui. To be specific, the IDO of the modified first intent is included in the IDO of the second intent, and the IDO of the modified first intent is associated with the intent knowledge of the second intent.

Further, the high-level intent system finds intent knowledge of a third intent in the high-level intent system based on the IDO/IDA of the unmodified first intent. The IDO of the unmodified first intent is included in an IDO of the third intent, and/or the IDA of the unmodified first intent is included in an IDA of the third intent. The high-level intent system dissociates the IDO/IDA of the unmodified first intent from the intent knowledge of the third intent. For example, in the foregoing example, IntentDrivenObjectProperties in the IDO of the third intent is Pudong, and the IDO of the unmodified first intent is included in the IDO of the third intent. In this case, the IDO of the unmodified first intent is dissociated from the intent knowledge of the third intent.

In this embodiment, the low-level intent system may notify the high-level intent system after modifying/deleting the intent knowledge. In this way, the modified intent knowledge is also modified and associated in the knowledge repository of the high-level intent system, to avoid invalidation of subintent knowledge or low efficiency of intent decomposition during intent decomposition and delivery of the high-level intent system; and the deleted intent knowledge is also deleted from the knowledge repository of the high-level intent system, to avoid intent delivery failure during intent decomposition of the high-level intent system.

An intent knowledge update subscription operation is added to an interface between converged systems, to feed back the modified/deleted intent knowledge by using the intent knowledge update notification after the low-level intent system modifies/deletes the intent knowledge.

Functions of modifying, deleting, and associating subintent knowledge are added inside the converged system. The intent knowledge of the high-level intent system is modified, dissociated, and re-associated before and after the low-level intent system modifies the intent knowledge. The intent knowledge of the high-level intent system is deleted and dissociated after the low-level intent system deletes the intent knowledge.

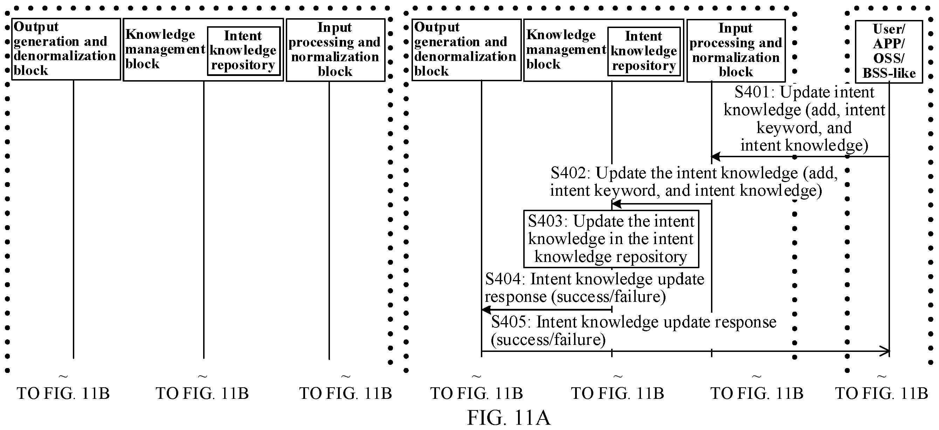

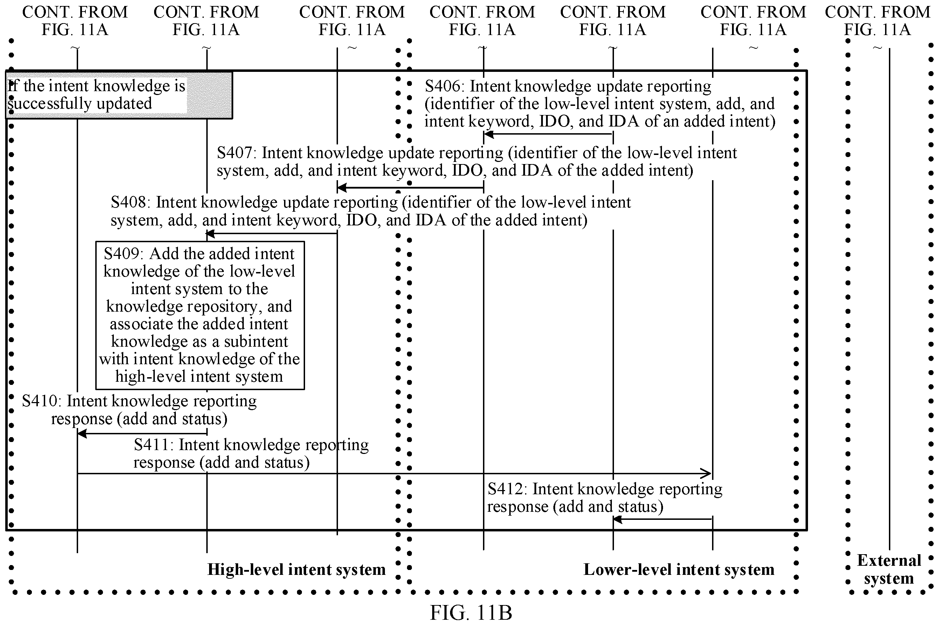

FIG. 11A and FIG. 11B is a schematic flowchart of yet another method for associating intent knowledge between intent systems according to an embodiment of this application. In this embodiment, a low-level intent system adds intent knowledge, and notifies a knowledge repository of a high-level intent system in a subscription-notification manner. Specifically, the method may include the following steps.

Steps S401 to S405: An external system (user/APP/OSSBSS-like) adds intent knowledge to the low-level intent system. The addition carries an update type (add), an intent keyword, and the intent knowledge.

If the low-level intent system successfully adds the intent knowledge:
Steps S406 to S408: A knowledge management FB of the low-level intent system sends an intent knowledge update report updateKnowledgeReport (producerReference, add, intentkeyword, IDO, and IDA) (which may also be referred to as an intent knowledge update notification) to a knowledge management FB of the high-level intent system, where producerReference is an identifier of the low-level intent system, add indicates that the low-level intent system adds the intent knowledge, and intentkeyword, IDO, and IDA indicate the added intent knowledge of the low-level intent system.
Step S409: The knowledge management FB of the high-level intent system adds the added intent knowledge of the low-level intent system to the knowledge repository of the high-level intent system, and performs subintent knowledge association with intent knowledge of the high-level intent system by using the added intent knowledge as a subintent.

For a specific implementation process, refer to step S216 in the embodiment shown in FIG. 9A and FIG. 9B.

S410 to S412: The high-level intent system sends an intent knowledge report response updateKnowledgeReport Response (status) (which may also be referred to as an intent knowledge update response) to the low-level intent system, where status indicates whether the add operation is performed on the knowledge repository of the high-level intent system.

In this embodiment, after adding the intent knowledge, the low-level intent system may directly report the added intent knowledge to the high-level intent system, so that the added intent knowledge can exist in the knowledge repository of the high-level intent system as a subintent, so that an intent decomposition and delivery capability of the high-level intent system may be enhanced.

An intent knowledge update reporting operation is added on an interface between converged systems, to directly report the added intent knowledge to the high-level intent system after the low-level intent system adds the intent knowledge. The high-level intent system does not need to send a subscription notification in advance.

A subintent knowledge association function is added inside the converged system to associate the added intent knowledge of the low-level intent system with the intent knowledge of the high-level intent system as a subintent.

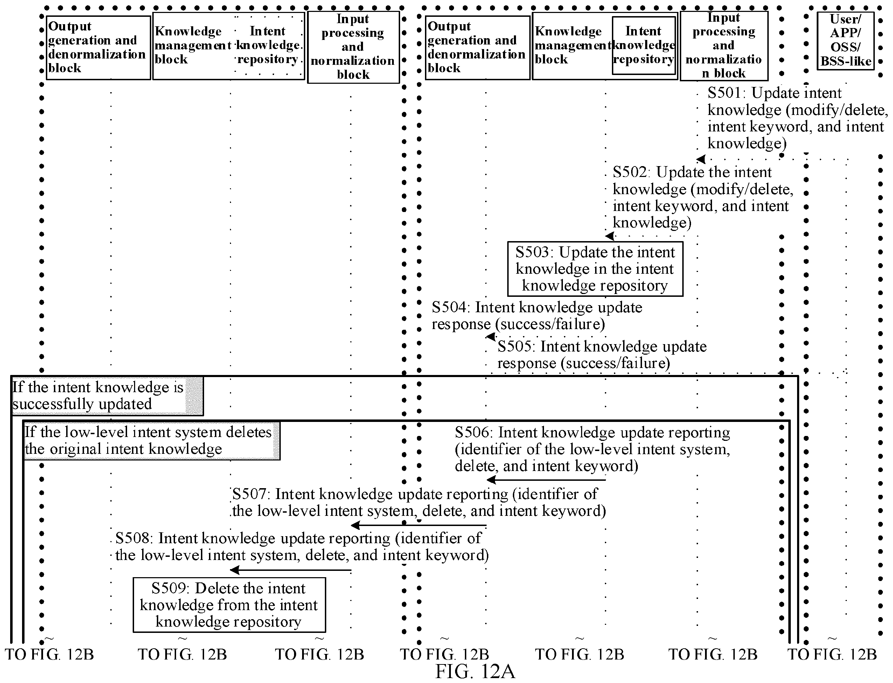

FIG. 12A and FIG. 12B is a schematic flowchart of still yet another method for associating intent knowledge between intent systems according to an embodiment of this application. In this embodiment, a low-level intent system modifies/deletes intent knowledge, and notifies a knowledge repository of a high-level intent system in a direct reporting manner. Specifically, the method may include the following steps.

Steps S501 to S505: An external system (user/APP/OSSBSS-like) indicates the low-level intent system to update the intent knowledge. The update includes an update type (modify/delete), an intent keyword, and the intent knowledge.

If the low-level intent system successfully updates the intent knowledge:
If the low-level intent system deletes the original intent knowledge:
Steps S506 to 508: A knowledge management FB of the low-level intent system sends an intent knowledge update report updateKnowledgeReport (producerReference, delete, and intentkeyword) to a knowledge management FB of the high-level intent system, where producerReference is an identifier of the low-level intent system, delete indicates that the low-level intent system deletes the intent knowledge, and intentkeyword indicates the intent knowledge deleted by the low-level intent system.
Step S509: The high-level intent system also deletes, from the knowledge repository, the intent knowledge deleted from the low-level intent system.

For a specific implementation, refer to step S316 in the embodiment shown in FIG. 10A and FIG. 10B.

Steps S510 to S512: The high-level intent system sends an updateKnowledgeReport response (delete and status) to the low-level intent system, where status indicates whether a delete operation is performed on the knowledge repository of the high-level intent system.

If the low-level intent system modifies the original intent knowledge:
Steps S513 to S515: The knowledge management FB of the low-level intent system sends an intent knowledge update report updateKnowledgeReport (producerReference, modify, intentkeywordbefore, and intentkeywordafter) to the knowledge management FB of the high-level intent system, where modify indicates that the low-level intent system modifies the intent knowledge, intentkeywordbefore indicates an intentkeyword, IDO, and IDA of the unmodified intent, and intentkeywordafter indicates an intentkeyword, IDO, and IDA of a modified intent.
Step S516: The high-level intent system modifies the modified intent knowledge in the low-level intent system to the knowledge repository, and performs subintent knowledge association with intent knowledge of the high-level intent system.

For a specific implementation, refer to step S320 in the embodiment shown in FIG. 10A and FIG. 10B.

Steps S517 to S519: The high-level intent system sends an updateKnowledgeReport response (modify and status) to the low-level intent system, where status indicates whether a modify operation is performed on the knowledge repository of the high-level intent system.

In this embodiment, the low-level intent system may directly report the modified/deleted intent knowledge to the high-level intent system. In this way, the modified intent knowledge is also modified and associated in the knowledge repository of the high-level intent system, to avoid invalidation of subintent knowledge or low efficiency of intent decomposition during intent decomposition and delivery of the high-level intent system; and the deleted intent knowledge is also deleted from the knowledge repository of the high-level intent system, to avoid intent delivery failure during intent decomposition of the high-level intent system.

An intent knowledge update reporting operation is added on an interface between converged systems, so that the low-level intent system directly reports the modified/deleted intent knowledge to the high-level intent system. The high-level intent system does not need to send a subscription notification in advance.

Functions of modifying, deleting, and associating subintent knowledge are added inside the converged system. The intent knowledge of the high-level intent system is modified, dissociated, and re-associated before and after the low-level intent system modifies the intent knowledge. The intent knowledge of the high-level intent system is deleted and dissociated after the low-level intent system deletes the intent knowledge.

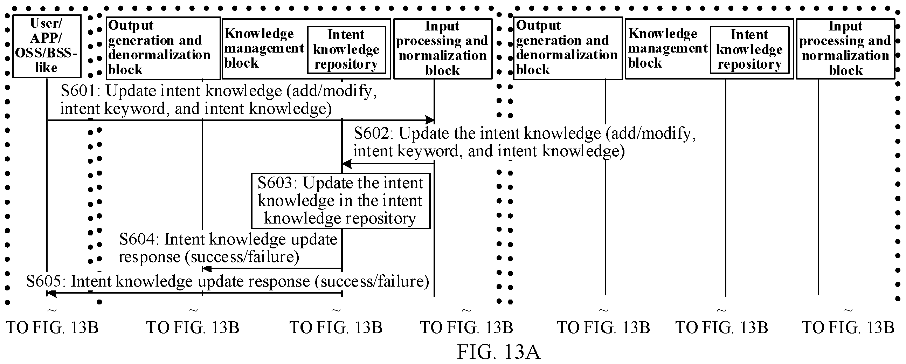

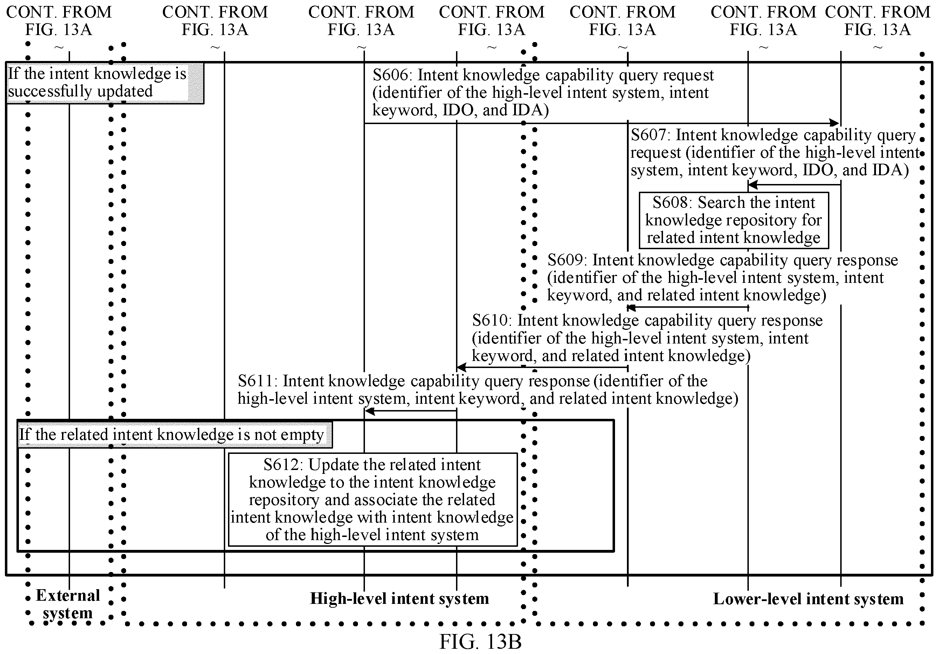

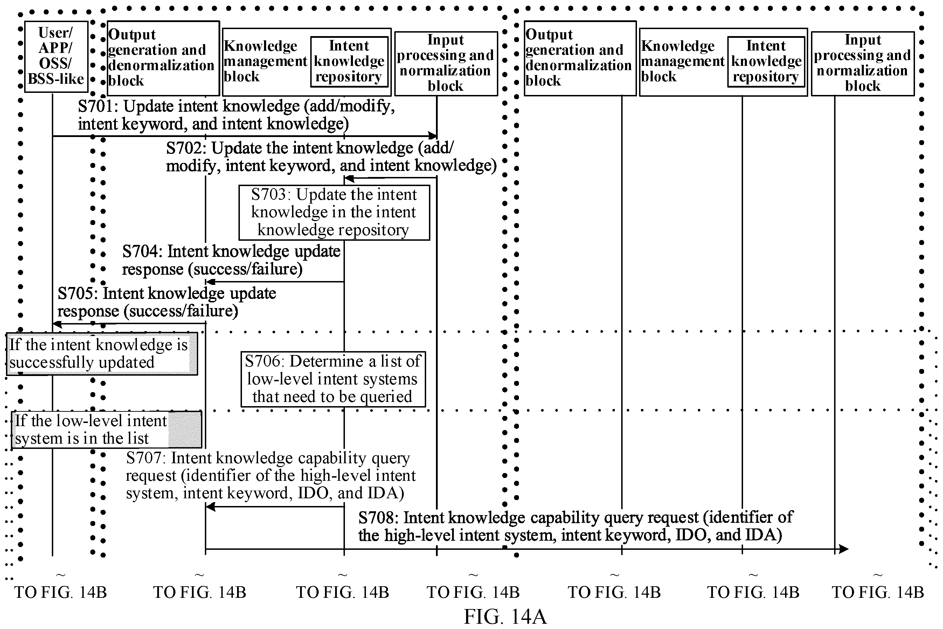

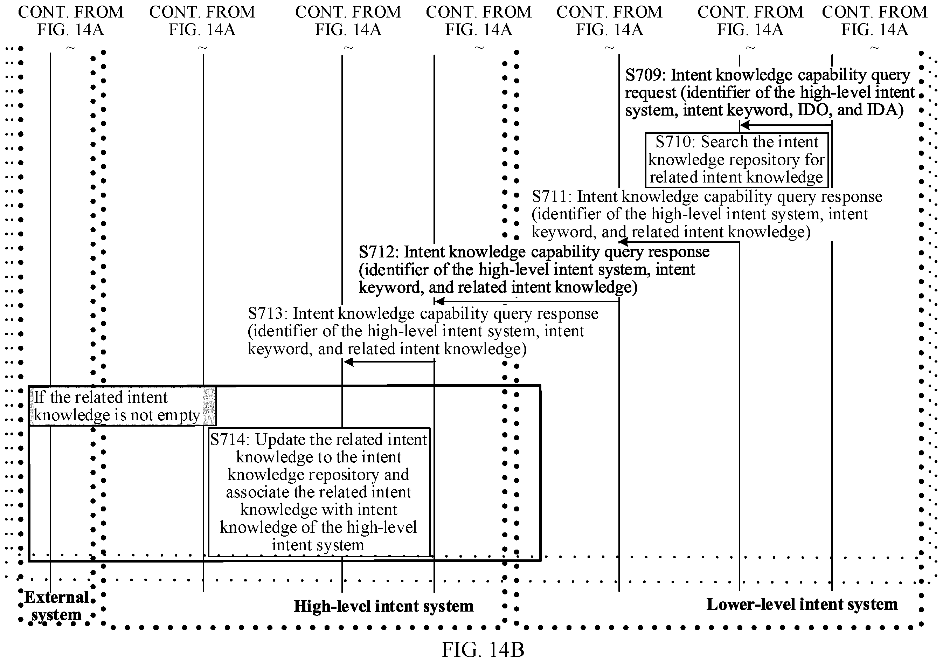

The following embodiments shown in FIG. 13A and FIG. 13B and FIG. 14A and FIG. 14B are corresponding to a scenario in which a high-level intent system updates intent knowledge and queries a knowledge repository of a low-level intent system.

FIG. 13A and FIG. 13B is a schematic flowchart of a further method for associating intent knowledge between intent systems according to an embodiment of this application. In this embodiment, a high-level intent system adds intent knowledge, and queries knowledge repositories of all low-level intent systems. Specifically, the method may include the following steps.

Steps S601 to S605: An external system (user/APP/OSSBSS-like) indicates the high-level intent system to add/modify the intent knowledge.

If the high-level intent system successfully adds/modifies the intent knowledge:
Steps S606 to S607: The high-level intent system sends an intent knowledge capability query request queryKnowledgeCapacity (consumerReference, Intentkeyword, IDO, and IDA) to all the low-level intent systems (referred to as third intent systems) of the high-level intent system, where Intentkeyword, IDO, and IDA are the intent knowledge added/modified in step S603 based on content in step S601.
Step S608: A knowledge management module of each low-level intent system queries for related/associated intent knowledge RelatedIntentknowledge based on the Intentkeyword, the IDO, and the IDA, where RelatedIntentknowledge is related subintent knowledge found in the low-level intent system based on the added/modified Intentkeyword, IDO, and IDA in the high-level intent system, and includes an intentkeyword, IDO, and IDA of subintent knowledge.
Steps S609 to S611: The high-level intent system sends an intent knowledge capability query response queryKnowledgeCapacity Response (consumerReference, Intentkeyword, and RelatedInten--tknowledge) to the low-level intent system, where

Intentkeyword indicates knowledge of the high-level intent system, and RelatedIntentknowledge indicates knowledge of the low-level intent system.

Step S612: The high-level intent system updates Relatedlntentknowledge to a knowledge repository, and performs subintent knowledge association with intent knowledge of the high-level intent system.

Specifically, if the high-level intent system adds the intent knowledge, the intent knowledge capability query request includes an Intentkeyword, IDA, and IDO of an added second intent. The low-level intent system finds, based on the Intentkeyword, IDA, and IDO of the added second intent in the high-level intent system, intent knowledge of a related first intent in the low-level intent system. The high-level intent system associates the intent knowledge of the first intent with at least one of the Intentkeyword, IDA, and IDO of the added second intent.

Specifically, if the high-level intent system modifies the Intentkeyword of the second intent, the intent knowledge capability query request includes an Intentkeyword of a modified second intent. The low-level intent system finds the Intentkeyword of the first intent based on the Intentkeyword of the modified second intent. The high-level intent system associates the Intentkeyword of the modified second intent with the Intentkeyword of the first intent.

If the high-level intent system modifies the IDO/IDA of the second intent, the intent knowledge capability query request includes an IDO/IDA of a modified second intent. The low-level intent system finds the IDO/IDA of the first intent based on the IDO/IDA of the modified second intent. The high-level intent system associates the IDO/IDA of the modified second intent with the IDO/IDA of the first intent.

In this embodiment, after adding/modifying the intent knowledge, the high-level intent system searches for the related intent knowledge of the low-level intent system, so that the intent knowledge in the low-level intent system is added/modified in the high-level intent system as subintent knowledge. The high-level intent system may perform intent decomposition and delivery on the added/modified intent knowledge.

An intent knowledge capability query operation is added to an interface between converged systems, to query for the intent knowledge of the low-level intent system through the operation after the high-level intent system adds the intent knowledge.

A subintent knowledge association function is added inside the convergent system, to associate the found intent knowledge of the low-level intent system with the added intent knowledge of the high-level intent system as a subintent.

FIG. 14A and FIG. 14B is a schematic flowchart of a sill further method for associating intent knowledge between intent systems according to an embodiment of this application. In this embodiment, a high-level intent system adds intent knowledge, and queries knowledge repositories of some low-level intent systems (needs to determine the low-level intent systems whose knowledge repositories are queried).

The high-level intent system needs to determine, based on subintent knowledge, the low-level intent systems to be queried, and determine a list. The subintent knowledge in the high-level intent system (intent knowledge of the low-level intent system) includes an Intentkeyword, an IDO, and an IDA. A general form of the IDO and the IDA is as follows, including "action" and "object" of the intent:
<IntentDrivenAction> := <IntentDrivenActionName><IntentDrivenActionProperties>
<IntentDrivenObject> := <IntentDrivenObjectName><IntentDrivenObj ectProperties>

Therefore, the low-level intent system is sifted based on to an IDO of the added intent knowledge of the high-level intent system and the IDO of the existing subintent knowledge. Only a low-level intent system that is within an IDO range of the added intent knowledge is queried. A method and steps for determining the list of low-level intent systems are as follows:
1. The high-level intent system adds the intent knowledge, including Intentkeyword1, IDOl, IDA1, constraint 1, and intentOperations1 [executionConditon, operationType, operation].
2. The high-level intent system searches for IntentDrivenObjectName2 and IntentDrivenObjectProperties2 of the existing subintent knowledge based on IntentDrivenObjectName1 and IntentDrivenObjectProperties1 in IDO1. If IntentDrivenObjectName2 and IntentDrivenObjectProperties2 are within ranges of IntentDrivenObjectName1 and IntentDrivenObjectProperties1, a low-level intent system corresponding to IntentDrivenObjectName2 and IntentDrivenObjectProperties2 is placed in the list.

For example, if IntentDrivenObjectProperties 1 is Pudong, and IntentDrivenObjectProperties2 is Jinqiao, the low-level intent system corresponding to IntentDrivenObjectProperties2 is placed in the list; or if IntentDrivenObjectProperties2 is Minhang, the low-level intent system corresponding to IntentDrivenObjectProperties2 does not need to be placed in the list.

Certainly, the low-level intent system is alternatively sifted based on an IDA of the added intent knowledge of the high-level intent system and the IDA of the existing subintent knowledge.

Specifically, the method may include the following steps.

For steps S701 to S705, refer to steps S601 to S605 in the embodiment shown in FIG. 13A and FIG. 13B.

If the high-level intent system successfully adds/modifies the intent knowledge:
Step S706: The high-level intent system determines, based on an Intentkeyword, IDO, and IDA of the added/modified intent knowledge, the list of low-level intent systems that need to be queried.
Steps S707 to S709: The high-level intent system sends an intent knowledge capability query request queryKnowledgeCapacity (consumerReference, Intentkeyword, IDO, IDA) to the low-level intent system in the list, where Intentkeyword, IDO, and IDA are the intent knowledge added/modified by the high-level intent system in step S703 based on content in step S701.
Step S710: A knowledge management module of the low-level intent system queries for related intent knowledge RelatedIntentknowledge based on the Intentkeyword, the IDO, and the IDA, where RelatedIntentknowledge is related subintent knowledge found in the low-level intent system based on the added/modified Intentkeyword, IDO, and IDA in the high-level intent system, and includes an intentkeyword, IDO, and IDA of subintent knowledge.
Steps S711 to S713: The low-level intent system sends an intent knowledge capability response queryKnowledgeCapacity Response (consumerReference, Intentkeyword, and RelatedInten--tknowledge) to the high-level intent system, where Intentkeyword indicates the intent knowledge added/modified by the high-level intent system, and RelatedIntentknowledge indicates the intent knowledge queried by the low-level intent system.
Step S714: The high-level intent system updates Relatedlntentknowledge to a knowledge repository, and performs subintent knowledge association with intent knowledge of the high-level intent system.

In this embodiment, after adding/modifying the intent knowledge, the high-level intent system searches for the related intent knowledge of the low-level intent system based on the list of low-level intent systems, so that the intent knowledge in the low-level intent system is added/modified in the high-level intent system as subintent knowledge. The high-level intent system may perform intent decomposition and delivery on the added/modified intent knowledge.

An intent knowledge capability query operation is added to an interface between converged systems, to query for the intent knowledge of the low-level intent system through the operation after the high-level intent system adds the intent knowledge.

A function of determining the list of low-level intent systems is added inside the converged system.

A subintent knowledge association function is added inside the convergent system, to associate the found intent knowledge of the low-level intent system with the added intent knowledge of the high-level intent system as a subintent.

Based on a same concept of the foregoing method for associating intent knowledge between intent systems, this application further provides the following communication apparatus.

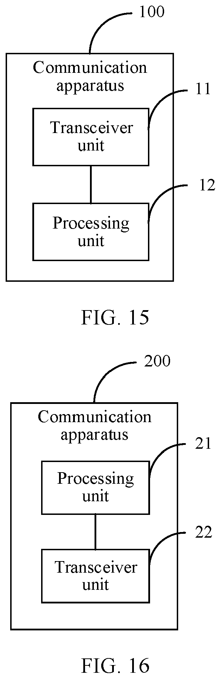

FIG. 15 is a schematic diagram of a structure of a communication apparatus according to an embodiment of this application. The communication apparatus may be the foregoing second intent system or a module in the second intent system. The communication apparatus 100 includes a transceiver unit 11 and a processing unit 12.

The transceiver unit 11 is configured to: when intent knowledge of a first intent in a first intent system is updated, receive an intent knowledge update notification sent by the first intent system. The intent knowledge update notification includes an update type and an intent keyword of the first intent. The processing unit 12 is configured to associate, based on the intent knowledge update notification, the intent knowledge that is of the first intent and that corresponds to the intent keyword of the first intent with intent knowledge of a second intent in the second intent system. The first intent is a subintent of the second intent.

In a possible implementation, the transceiver unit 11 is further configured to send an intent knowledge update subscription request to the first intent system. The intent knowledge update subscription request includes an identifier of the second intent system and the update type. The transceiver unit 11 is further configured to receive an intent knowledge update subscription response sent by the first intent system. The intent knowledge update subscription response includes at least one of the following information: a subscription identifier and a subscription status. The intent knowledge update notification further includes the subscription identifier

In another possible implementation, the intent knowledge update notification further includes an identifier of the first intent system. The transceiver unit 11 is further configured to send an intent knowledge update response to the first intent system.

In still another possible implementation, the update type is adding the intent knowledge of the first intent, and the intent knowledge update notification further includes an intent driven object and intent driven action of the first intent. The processing unit 12 is configured to find, based on the intent driven object and intent driven action of the first intent, the intent knowledge of the second intent in the second intent system. The intent driven object of the first intent is included in an intent driven object of the second intent, and/or the intent driven action of the first intent is included in an intent driven action of the second intent. The processing unit 12 is further configured to associate the intent keyword, intent driven object, and intent driven action of the first intent with the intent knowledge of the second intent.

In still another possible implementation, the update type is deleting the intent knowledge of the first intent. The processing unit 12 is configured to search, based on the intent keyword of the first intent, the second intent system for the intent knowledge that is of the first intent and that corresponds to the intent keyword of the first intent. The processing unit 12 is further configured to delete the found intent knowledge of the first intent

In still another possible implementation, the update type is modifying the intent knowledge of the first intent, and the intent knowledge update notification further includes at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent. The processing unit 12 is configured to perform at least one of the following operations: after the first intent system modifies the intent keyword of the first intent, searching, based on the intent keyword of the unmodified first intent, the second intent system for the intent knowledge that is of the first intent and that corresponds to the intent keyword of the unmodified first intent, and replacing the intent keyword of the unmodified first intent in the intent knowledge of the first intent with the intent keyword of the modified first intent; or after the first intent system modifies the intent driven object and/or intent driven action of the first intent, finding the intent knowledge of the second intent in the second intent system based on the intent driven object and/or intent driven action of the modified first intent, where the intent driven object of the modified first intent is included in the intent driven object of the second intent, and/or the intent driven action of the modified first intent is included in the intent driven action of the second intent; and associating the intent driven object and/or intent driven action of the modified first intent with the intent knowledge of the second intent.

In still another possible implementation, the processing unit 12 is further configured to find intent knowledge of a third intent in the second intent system based on the intent driven object and/or intent driven action of the unmodified first intent. The intent driven object of the unmodified first intent is included in an intent driven object of the third intent, and/or the intent driven action of the unmodified first intent is included in the intent driven action of the third intent. The processing unit 12 is further configured to dissociate the intent driven object and/or intent driven action of the unmodified first intent from the intent knowledge of the third intent.

In still another possible implementation, the transceiver unit 11 is configured to: when the intent knowledge of the second intent is updated, send an intent knowledge capability query request to at least one third intent system. The intent knowledge capability query request includes at least one of the following information: the identifier of the second intent system, or an intent keyword, intent driven object, and intent driven action of an updated second intent. The first intent system is one of the at least one third intent system. The transceiver unit 11 is further configured to receive an intent knowledge capability query response sent by the at least one third system intent system. The intent knowledge capability query response includes at least one of the following information: the identifier of the second intent system, an identifier of the at least one third intent system, and the intent knowledge that is of the first intent and that is associated with at least one of the intent keyword, intent driven object, and intent driven action of the updated second intent. The processing unit 12 is further configured to associate the intent knowledge of the first intent with at least one of the intent keyword, intent driven object, and intent driven action of the updated second intent.

In still another possible implementation, the update type is modifying the intent knowledge of the second intent, and the processing unit 12 is further configured to perform at least one of the following operations: after the second intent system modifies the intent keyword of the second intent, associating the intent keyword of the modified second intent with the intent keyword of the first intent; or after the second intent system modifies the intent driven object and/or intent driven action of the second intent, associating the intent driven object and/or intent driven action of the modified second intent with the intent driven object and/or intent driven action of the first intent.

In still another possible implementation, the processing unit 12 is further configured to find, in the second intent system and based on the intent driven object and/or intent driven action of the unmodified second intent, intent knowledge of a fourth intent in the at least one third intent system. The intent driven object of the unmodified second intent includes an intent driven object of the fourth intent, and/or the intent driven action of the unmodified second intent includes an intent driven action of the fourth intent. The processing unit 12 is further configured to dissociate the intent driven object and/or intent driven action of the unmodified second intent from the intent knowledge of the fourth intent.

In still another possible implementation, the processing unit 12 is further configured to determine the at least one third intent system based on the intent driven object of the updated second intent. The intent driven object of the first intent in the at least one third intent system is included in the intent driven object of the updated second intent.

For specific implementations of the transceiver unit 11 and the processing unit 12, refer to the related descriptions of the second intent system in FIG. 8 to FIG. 14A and FIG. 14B.

According to the communication apparatus provided in this embodiment of this application, the intent knowledge may be associated between intent systems when the intent knowledge of the first intent in the first intent system is updated or the intent knowledge of the second intent in the second intent system is updated, to avoid that the intent knowledge of the first intent in the second intent system is missing or invalid due to the update of the intent knowledge of first intent, or avoid that intent decomposition and delivery cannot be implemented because the intent knowledge of the updated second intent cannot be associated with the intent knowledge of the first intent in the second intent system.

FIG. 16 is a schematic diagram of a structure of another communication apparatus according to an embodiment of this application. The communication apparatus may be the foregoing first intent system or a module in the first intent system. The communication apparatus 200 includes a processing unit 21 and a transceiver unit 22.

The processing unit 21 is configured to determine that intent knowledge of a first intent in the first intent system is updated. The transceiver unit 22 is configured to send an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system. The first intent is a subintent of the second intent, and the intent knowledge update notification includes an update type and the intent keyword of the first intent.

In a possible implementation, the transceiver unit 22 is further configured to receive an intent knowledge update subscription request sent by the second intent system. The intent knowledge update subscription request includes an identifier of the second intent system and the update type. The transceiver unit 22 is further configured to send an intent knowledge update subscription response to the second intent system. The intent knowledge update subscription response includes at least one of the following information: a subscription identifier and a subscription status. The intent knowledge update notification further includes the subscription identifier

In another possible implementation, the transceiver unit 22 is further configured to receive an intent knowledge update response sent by the second intent system.

In still another possible implementation, the update type includes at least one of the following: adding the intent knowledge of the first intent, deleting the intent knowledge of the first intent, or modifying the intent knowledge of the first intent. If the update type is adding the intent knowledge of the first intent, the intent knowledge update notification further includes an intent driven object and intent driven action of the first intent. If the update type is modifying the intent knowledge of the first intent, the intent knowledge notification further includes at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

In still another possible implementation, the transceiver unit 22 is further configured to: when the intent knowledge of the second intent is updated, receive an intent knowledge capability query request sent by the second intent system. The intent knowledge capability query request includes at least one of the following information: the identifier of the second intent system, or an intent keyword, intent driven object, and intent driven action of an updated second intent. The first intent system is one of at least one third intent system. The processing unit 21 is configured to find the intent knowledge that is of the first intent and that is associated with at least one of the intent keyword, intent driven object, and intent driven action of the updated second intent. The transceiver unit 22 is further configured to send an intent knowledge capability query response to the second intent system. The intent knowledge capability query response includes at least one of the following information: the identifier of the second intent system, an identifier of the at least one third intent system, and the intent knowledge of the first intent.

For specific implementations of the processing unit 21 and the transceiver unit 22, refer to the related descriptions of the first intent system in FIG. 8 to FIG. 14A and FIG. 14B.

According to the communication apparatus provided in this embodiment of this application, the intent knowledge may be associated between intent systems when the intent knowledge of the first intent in the first intent system is updated or the intent knowledge of the second intent in the second intent system is updated, to avoid that the intent knowledge of the first intent in the second intent system is missing or invalid due to the update of the intent knowledge of first intent, or avoid that intent decomposition and delivery cannot be implemented because the intent knowledge of the updated second intent cannot be associated with the intent knowledge of the first intent in the second intent system.

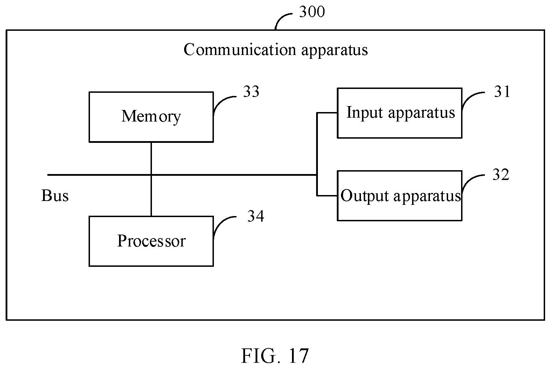

As shown in FIG. 17, a schematic diagram of a structure of a communication apparatus is further provided. The communication apparatus is configured to perform the foregoing communication method. Some or all of the foregoing methods may be implemented by using hardware, or may be implemented by using software or firmware.

Optionally, during specific implementation, the communication apparatus may be a chip or an integrated circuit.

Optionally, when some or all of the communication methods in the foregoing embodiments are implemented by using the software or the firmware, the communication methods may be implemented by using the communication apparatus 300 provided in FIG. 17. As shown in FIG. 17, the communication apparatus 300 may include:
a memory 33 and a processor 34 (where there may be one or more processors 34 in the apparatus, and one processor is used as an example in FIG. 17), and may further include an input apparatus 31 and an output apparatus 32. In this embodiment, the input apparatus 31, the output apparatus 32, the memory 33, and the processor 34 may be connected through a bus or in another manner. For example, they are connected through a bus in FIG. 17.

In an embodiment, the processor 34 is configured to perform the method steps performed by the first intent system in FIG. 8 to FIG. 14A and FIG. 14B.

In another embodiment, the processor 34 is configured to perform the method steps performed by the second intent system in FIG. 8 to FIG. 14A and FIG. 14B.

Optionally, a program of the communication method may be stored in the memory 33. The memory 33 may be a physically independent unit, or may be integrated with the processor 34. The memory 33 may alternatively be configured to store data.

Optionally, when some or all of the communication methods in the foregoing embodiments are implemented by using the software, the communication apparatus may alternatively include only a processor. A memory configured to store a program is located outside the communication apparatus. The processor is connected to the memory through a circuit/wire, and is configured to read and execute the program stored in the memory.

The processor may be a central processing unit (central processing unit, CPU), a network processor (network processor, NP), or a WLAN device.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The memory may include a volatile memory (volatile memory), for example, a random access store (random access memory, RAM). The memory may alternatively include a non-volatile memory (non-volatile memory), for example, a flash memory (flash memory), a hard disk drive (hard disk drive, HDD), or a solid-state drive (solid-state drive, SSD). The memory may alternatively include a combination of the foregoing types of memories.

A person skilled in the art should understand that one or more embodiments of this disclosure may be provided as a method, a system, or a computer program product. Therefore, the one or more embodiments of this disclosure may use a form of a hardware-only embodiment, a software-only embodiment, or an embodiment with a combination of software and hardware. Moreover, the one or more embodiments of this disclosure may use a form of a computer program product that is implemented on one or more computer-usable storage media (including but not limited to a disk memory, a CD-ROM, an optical memory, and the like) that include computer usable program code.

An embodiment of this application further provides a chip system, including at least one processor and an interface. The at least one processor is coupled to a memory through the interface. When the at least one processor executes a computer program or instructions in the memory, the method in any one of the foregoing method embodiments is performed. Optionally, the chip system may include a chip, or may include the chip and another discrete component. This is not specifically limited in embodiments of this application.

An embodiment of this application further provides a computer-readable storage medium that stores a computer program. When the program is executed by a processor, the steps of the method described in any embodiment of this disclosure are implemented.

An embodiment of this application further provides a computer program product including instructions. When the computer program product runs on a computer, the computer is enabled to perform the steps of the method described in any embodiment of this disclosure.

An embodiment of this application further provides a communication system. The communication system includes the foregoing communication apparatus.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, "a plurality of" means two or more than two unless otherwise specified. "At least one item (piece) of the following" or a similar expression thereof means any combination of these items, including a singular item (piece) or any combination of plural items (pieces). For example, at least one of a, b, or c may indicate: a; b; c; a and b; a and c; b and c; or a, b, and c; where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner for ease of understanding.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted by using the computer-readable storage medium. For example, the computer instructions may be transmitted from a website, computer, server, or data center to another website, computer, server, or data center in a wired (for example, a coaxial cable, an optical fiber, or a digital subscriber line DSL) or wireless (for example, infrared, radio, and microwave, or the like) manner. The computer-readable storage medium may be any usable medium that can be accessed by a computer, or a data storage device, such as a server or a data center, integrating one or more usable media. The usable medium may be a read-only memory (read-only memory, ROM), a random access memory (random access memory, RAM), a magnetic medium such as a floppy disk, a hard disk drive, a magnetic tape, or a magnetic disc, an optical medium such as a digital versatile disc (digital versatile disc, DVD), a semiconductor medium such as a solid-state drive (solid-state drive, SSD), or the like.

## Claims

1. A method for associating intent knowledge between intent systems, wherein the method comprises:
when intent knowledge of a first intent in a first intent system is updated, receiving, by a second intent system, an intent knowledge update notification sent by the first intent system, wherein the intent knowledge update notification comprises an update type and an intent keyword of the first intent; and
associating, by the second intent system based on the intent knowledge update notification, the intent knowledge that is of the first intent and that corresponds to the intent keyword of the first intent with intent knowledge of a second intent in the second intent system, wherein the first intent is a subintent of the second intent.

2. The method according to claim 1, wherein before the receiving, by a second intent system, an intent knowledge update notification sent by the first intent system, the method further comprises:
sending, by the second intent system, an intent knowledge update subscription request to the first intent system, wherein the intent knowledge update subscription request comprises an identifier of the second intent system and the update type; and
receiving, by the second intent system, an intent knowledge update subscription response sent by the first intent system, wherein the intent knowledge update subscription response comprises at least one of the following information: a subscription identifier and a subscription status, wherein
the intent knowledge update notification further comprises the subscription identifier

3. The method according to claim 1, wherein the intent knowledge update notification further comprises an identifier of the first intent system, and after the receiving, by a second intent system, an intent knowledge update notification sent by the first intent system, the method further comprises:
sending, by the second intent system, an intent knowledge update response to the first intent system.

4. The method according to any one of claims 1 to 3, wherein the update type is adding the intent knowledge of the first intent, and the intent knowledge update notification further comprises an intent driven object and intent driven action of the first intent; and
the associating, by the second intent system based on the intent knowledge update notification, the intent knowledge that is of the first intent and that corresponds to the intent keyword of the first intent with intent knowledge of a second intent in the second intent system comprises:
finding, by the second intent system based on the intent driven object and intent driven action of the first intent, the intent knowledge of the second intent in the second intent system, wherein the intent driven object of the first intent is comprised in an intent driven object of the second intent, and/or the intent driven action of the first intent is comprised in an intent driven action of the second intent; and
associating, by the second intent system, the intent keyword, intent driven object, and intent driven action of the first intent with the intent knowledge of the second intent.

5. The method according to any one of claims 1 to 4, wherein the update type is deleting the intent knowledge of the first intent, and the associating, by the second intent system based on the intent knowledge update notification, the intent knowledge that is of the first intent and that corresponds to the intent keyword of the first intent with intent knowledge of a second intent in the second intent system comprises:
searching, by the second intent system based on the intent keyword of the first intent, the second intent system for the intent knowledge that is of the first intent and that corresponds to the intent keyword of the first intent; and
deleting, by the second intent system, the found intent knowledge of the first intent.

6. The method according to any one of claims 1 to 5, wherein the update type is modifying the intent knowledge of the first intent, and the intent knowledge update notification further comprises at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent; and
the associating, by the second intent system based on the intent knowledge update notification, the intent knowledge that is of the first intent and that corresponds to the intent keyword of the first intent with intent knowledge of a second intent in the second intent system comprises at least one of the following operations:
after the first intent system modifies the intent keyword of the first intent, searching, by the second intent system based on the intent keyword of the unmodified first intent, the second intent system for the intent knowledge that is of the first intent and that corresponds to the intent keyword of the unmodified first intent; and replacing, by the second intent system, the intent keyword of the unmodified first intent in the intent knowledge of the first intent with the intent keyword of the modified first intent;
after the first intent system modifies the intent driven object and/or intent driven action of the first intent, finding, by the second intent system, the intent knowledge of the second intent in the second intent system based on the intent driven object and/or intent driven action of the modified first intent, wherein the intent driven object of the modified first intent is comprised in the intent driven object of the second intent, and/or the intent driven action of the modified first intent is comprised in the intent driven action of the second intent; and
associating, by the second intent system, the intent driven object and/or intent driven action of the modified first intent with the intent knowledge of the second intent.

7. The method according to claim 6, wherein the method further comprises: finding, by the second intent system, intent knowledge of a third intent in the second intent system based on the intent driven object and/or intent driven action of the unmodified first intent, wherein the intent driven object of the unmodified first intent is comprised in an intent driven object of the third intent, and/or the intent driven action of the unmodified first intent is comprised in the intent driven action of the third intent; and
dissociating, by the second intent system, the intent driven object and/or intent driven action of the unmodified first intent from the intent knowledge of the third intent.

8. The method according to any one of claims 1 to 7, wherein the method further comprises:
when the intent knowledge of the second intent is updated, sending, by the second intent system, an intent knowledge capability query request to at least one third intent system, wherein the intent knowledge capability query request comprises at least one of the following information: the identifier of the second intent system, or an intent keyword, intent driven object, and intent driven action of an updated second intent, wherein the first intent system is one of the at least one third intent system;
receiving, by the second intent system, an intent knowledge capability query response sent by the at least one third system intent system, wherein the intent knowledge capability query response comprises at least one of the following information: the identifier of the second intent system, an identifier of the at least one third intent system, and the intent knowledge that is of the first intent and that is associated with at least one of the intent keyword, intent driven object, and intent driven action of the updated second intent; and
associating, by the second intent system, the intent knowledge of the first intent with at least one of the intent keyword, intent driven object, and intent driven action of the updated second intent.

9. The method according to claim 8, wherein the update type is modifying the intent knowledge of the second intent, and the associating, by the second intent system, the intent knowledge of the first intent with at least one of the intent keyword, intent driven object, and intent driven action of the updated second intent comprises at least one of the following operations:
after the second intent system modifies the intent keyword of the second intent, associating, by the second intent system, the intent keyword of the modified second intent with the intent keyword of the first intent; and
after the second intent system modifies the intent driven object and/or intent driven action of the second intent, associating, by the second intent system, the intent driven object and/or intent driven action of the modified second intent with the intent driven object and/or intent driven action of the first intent.

10. The method according to claim 9, wherein the method further comprises: finding, by the second intent system in the second intent system and based on the intent driven object and/or intent driven action of the unmodified second intent, intent knowledge of a fourth intent in the at least one third intent system, wherein the intent driven object of the unmodified second intent comprises an intent driven object of the fourth intent, and/or the intent driven action of the unmodified second intent comprises an intent driven action of the fourth intent; and
dissociating, by the second intent system, the intent driven object and/or intent driven action of the unmodified second intent from the intent knowledge of the fourth intent.

11. The method according to any one of claims 8 to 10, wherein before the sending, by the second intent system, an intent knowledge capability query request to at least one third intent system, the method further comprises:
determining, by the second intent system, the at least one third intent system based on the intent driven object of the updated second intent, wherein the intent driven object of the first intent in the at least one third intent system is comprised in the intent driven object of the updated second intent.

12. A method for associating intent knowledge between intent systems, wherein the method comprises:
determining that intent knowledge of a first intent in a first intent system is updated; and
sending, by the first intent system, an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system, wherein the first intent is a subintent of the second intent, and the intent knowledge update notification comprises an update type and the intent keyword of the first intent.

13. The method according to claim 12, wherein before the sending, by the first intent system, an intent knowledge update notification to a second intent system, the method further comprises:
receiving, by the first intent system, an intent knowledge update subscription request sent by the second intent system, wherein the intent knowledge update subscription request comprises an identifier of the second intent system and the update type; and
sending, by the first intent system, an intent knowledge update subscription response to the second intent system, wherein the intent knowledge update subscription response comprises at least one of the following information: a subscription identifier and a subscription status, wherein
the intent knowledge update notification further comprises the subscription identifier

14. The method according to claim 12, wherein after the sending, by the first intent system, an intent knowledge update notification to a second intent system, the method further comprises:
receiving, by the first intent system, an intent knowledge update response sent by the second intent system.

15. The method according to any one of claims 12 to 14, wherein the update type comprises at least one of the following: adding the intent knowledge of the first intent, deleting the intent knowledge of the first intent, or modifying the intent knowledge of the first intent; and
if the update type is adding the intent knowledge of the first intent, the intent knowledge update notification further comprises an intent driven object and intent driven action of the first intent; or
if the update type is modifying the intent knowledge of the first intent, the intent knowledge notification further comprises at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

16. The method according to any one of claims 12 to 15, wherein the method further comprises:
when the intent knowledge of the second intent is updated, receiving, by the first intent system, an intent knowledge capability query request sent by the second intent system, wherein the intent knowledge capability query request comprises at least one of the following information: the identifier of the second intent system, or an intent keyword, intent driven object, and intent driven action of an updated second intent, wherein the first intent system is one of at least one third intent system;
finding, by the first intent system, the intent knowledge that is of the first intent and that is associated with at least one of the intent keyword, intent driven object, and intent driven action of the updated second intent; and
sending, by the first intent system, an intent knowledge capability query response to the second intent system, wherein the intent knowledge capability query response comprises at least one of the following information: the identifier of the second intent system, an identifier of the at least one third intent system, and the intent knowledge of the first intent.

17. A communication apparatus, wherein the apparatus comprises:
a transceiver unit, configured to: when intent knowledge of a first intent in a first intent system is updated, receive an intent knowledge update notification sent by the first intent system, wherein the intent knowledge update notification comprises an update type and an intent keyword of the first intent; and
a processing unit, configured to associate, based on the intent knowledge update notification, the intent knowledge that is of the first intent and that corresponds to the intent keyword of the first intent with intent knowledge of a second intent in a second intent system, wherein the first intent is a subintent of the second intent.

18. The apparatus according to claim 17, wherein
the transceiver unit is further configured to send an intent knowledge update subscription request to the first intent system, wherein the intent knowledge update subscription request comprises an identifier of the second intent system and the update type; and
the transceiver unit is further configured to receive an intent knowledge update subscription response sent by the first intent system, wherein the intent knowledge update subscription response comprises at least one of the following information: a subscription identifier and a subscription status, wherein
the intent knowledge update notification further comprises the subscription identifier

19. The apparatus according to claim 17, wherein the intent knowledge update notification further comprises an identifier of the first intent system; and
the transceiver unit is further configured to send an intent knowledge update response to the first intent system.

20. The apparatus according to any one of claims 17 to 19, wherein the update type is adding the intent knowledge of the first intent, and the intent knowledge update notification further comprises an intent driven object and intent driven action of the first intent; and
the processing unit is configured to find, based on the intent driven object and intent driven action of the first intent, the intent knowledge of the second intent in the second intent system, wherein the intent driven object of the first intent is comprised in an intent driven object of the second intent, and/or the intent driven action of the first intent is comprised in an intent driven action of the second intent; and
the processing unit is further configured to associate the intent keyword, intent driven object, and intent driven action of the first intent with the intent knowledge of the second intent.

21. The apparatus according to any one of claims 17 to 20, wherein the update type is deleting the intent knowledge of the first intent;
the processing unit is further configured to search, based on the intent keyword of the first intent, the second intent system for the intent knowledge that is of the first intent and that corresponds to the intent keyword of the first intent; and
the processing unit is further configured to delete the found intent knowledge of the first intent.

22. The apparatus according to any one of claims 17 to 21, wherein the update type is modifying the intent knowledge of the first intent, and the intent knowledge update notification further comprises at least one of the following information: the keyword of the unmodified first intent, the intent driven object of the unmodified first intent, the intent driven action of the unmodified first intent, a keyword of a modified first intent, an intent driven object of the modified first intent, and an intent driven action of the modified first intent; and
the processing unit is further configured to perform at least one of the following operations:
after the first intent system modifies the intent keyword of the first intent, searching, based on the intent keyword of the unmodified first intent, the second intent system for the intent knowledge that is of the first intent and that corresponds to the intent keyword of the unmodified first intent; and replacing the intent keyword of the unmodified first intent in the intent knowledge of the first intent with the intent keyword of the modified first intent;
after the first intent system modifies the intent driven object and/or intent driven action of the first intent, finding the intent knowledge of the second intent in the second intent system based on the intent driven object and/or intent driven action of the modified first intent, wherein the intent driven object of the modified first intent is comprised in the intent driven object of the second intent, and/or the intent driven action of the modified first intent is comprised in the intent driven action of the second intent; and
associating the intent driven object and/or intent driven action of the modified first intent with the intent knowledge of the second intent.

23. The apparatus according to claim 22, wherein the processing unit is further configured to find intent knowledge of a third intent in the second intent system based on the intent driven object and/or intent driven action of the unmodified first intent, wherein the intent driven object of the unmodified first intent is comprised in an intent driven object of the third intent, and/or the intent driven action of the unmodified first intent is comprised in the intent driven action of the third intent; and
the processing unit is further configured to dissociate the intent driven object and/or intent driven action of the unmodified first intent from the intent knowledge of the third intent.

24. The apparatus according to any one of claims 17 to 23, wherein
the transceiver unit is further configured to: when the intent knowledge of the second intent is updated, send an intent knowledge capability query request to at least one third intent system, wherein the intent knowledge capability query request comprises at least one of the following information: the identifier of the second intent system, or an intent keyword, intent driven object, and intent driven action of an updated second intent, wherein the first intent system is one of the at least one third intent system;
the transceiver unit is further configured to receive an intent knowledge capability query response sent by the at least one third system intent system, wherein the intent knowledge capability query response comprises at least one of the following information: the identifier of the second intent system, an identifier of the at least one third intent system, and the intent knowledge that is of the first intent and that is associated with at least one of the intent keyword, intent driven object, and intent driven action of the updated second intent; and
the processing unit is further configured to associate the intent knowledge of the first intent with at least one of the intent keyword, intent driven object, and intent driven action of the updated second intent.

25. The apparatus according to claim 24, wherein the update type is modifying the intent knowledge of the second intent, and the processing unit is further configured to perform at least one of the following operations:
after the intent keyword of the second intent is modified, associating an intent keyword of a modified second intent with the intent keyword of the first intent; and
after the intent driven object and/or intent driven action of the second intent is modified, associating an intent driven object and/or intent driven action of the modified second intent with the intent driven object and/or intent driven action of the first intent.

26. The apparatus according to claim 25, wherein the processing unit is further configured to find, in the second intent system and based on the intent driven object and/or intent driven action of the unmodified second intent, intent knowledge of a fourth intent in the at least one third intent system, wherein the intent driven object of the unmodified second intent comprises an intent driven object of the fourth intent, and/or the intent driven action of the unmodified second intent comprises an intent driven action of the fourth intent; and
the processing unit is further configured to dissociate the intent driven object and/or intent driven action of the unmodified second intent from the intent knowledge of the fourth intent.

27. The apparatus according to any one of claims 24 to 26, wherein the processing unit is further configured to determine the at least one third intent system based on the intent driven object of the updated second intent, wherein the intent driven object of the first intent in the at least one third intent system is comprised in the intent driven object of the updated second intent.

28. A communication apparatus, wherein the apparatus comprises:
a processing unit, configured to determine that intent knowledge of a first intent in a first intent system is updated; and
a transceiver unit, configured to send an intent knowledge update notification to a second intent system, to enable the second intent system to associate, based on the intent knowledge update notification, the intent knowledge that is of the first intent and that corresponds to an intent keyword of the first intent with intent knowledge of a second intent in the second intent system, wherein the first intent is a subintent of the second intent, and the intent knowledge update notification comprises an update type and the intent keyword of the first intent.

29. The apparatus according to claim 28, wherein
the transceiver unit is further configured to receive an intent knowledge update subscription request sent by the second intent system, wherein the intent knowledge update subscription request comprises an identifier of the second intent system and the update type; and
the transceiver unit is further configured to send an intent knowledge update subscription response to the second intent system, wherein the intent knowledge update subscription response comprises at least one of the following information: a subscription identifier and a subscription status, wherein
the intent knowledge update notification further comprises the subscription identifier.

30. The apparatus according to claim 28, wherein the transceiver unit is further configured to receive an intent knowledge update response sent by the second intent system.

31. The apparatus according to any one of claims 28 to 30, wherein the update type comprises at least one of the following: adding the intent knowledge of the first intent, deleting the intent knowledge of the first intent, or modifying the intent knowledge of the first intent; and
if the update type is adding the intent knowledge of the first intent, the intent knowledge update notification further comprises an intent driven object and intent driven action of the first intent; or
if the update type is modifying the intent knowledge of the first intent, the intent knowledge notification further comprises at least one of the following information: the keyword of the unmodified first intent, an intent driven object of the unmodified first intent, an intent driven action of the unmodified first intent, a keyword of a modified first intent, an intent driven object of the modified first intent, and an intent driven action of the modified first intent.

32. The apparatus according to any one of claims 28 to 31, wherein
the transceiver unit is further configured to: when the intent knowledge of the second intent is updated, receive an intent knowledge capability query request sent by the second intent system, wherein the intent knowledge capability query request comprises at least one of the following information: the identifier of the second intent system, or an intent keyword, intent driven object, and intent driven action of an updated second intent, wherein the first intent system is one of at least one third intent system;
the processing unit is further configured to find the intent knowledge that is of the first intent and that is associated with at least one of the intent keyword, intent driven object, and intent driven action of the updated second intent; and
the transceiver unit is further configured to send an intent knowledge capability query response to the second intent system, wherein the intent knowledge capability query response comprises at least one of the following information: the identifier of the second intent system, an identifier of the at least one third intent system, and the intent knowledge of the first intent.

33. A communication apparatus, comprising a processor, a memory, and instructions that are stored on the memory and that can be run on the processor, wherein when the instructions are run, the communication apparatus is enabled to perform the method according to any one of claims 1 to 11.

34. A communication apparatus, comprising a processor, a memory, and instructions that are stored on the memory and that can be run on the processor, wherein when the instructions are run, the communication apparatus is enabled to perform the method according to any one of claims 12 to 16.

35. A computer-readable storage medium, comprising instructions, wherein when the instructions are run on a computer, the method according to any one of claims 1 to 16 is performed.
